# EUROPÄISCHE PATENTSCHRIFT

(11) **EP 4 165 996 B1**
(45) Veröffentlichungstag und Bekanntmachung des Hinweises auf die Patenterteilung: **31.07.2024**
(21) Anmeldenummer: 22198200.2
(22) Anmeldetag: 27.09.2022
(51) Int. Cl.: A22C 7/00

(54) **PRESSEINRICHTUNG**
PRESS
DISPOSITIF DE PRESSAGE

(30) Priorität: 12.10.2021 DE 102021126437; 04.02.2022 DE 102022102667
(43) Veröffentlichungstag der Anmeldung: 19.04.2023
(73) Patentinhaber: Textor Maschinenbau GmbH, 87787 Wolfertschwenden (DE)
(72) Erfinder: Müller, Fabian, Betzigau (DE); Mayer, Josef, Memmingerberg (DE); Hehle, Matthias, Waltenhofen (DE); Seidel, Markus, Egg an der Günz (DE); Horst, Theodor, Amöneburg-Rossdorf (DE)
(74) Vertreter: Manitz Finsterwald Patent- und Rechtsanwaltspartnerschaft mbB

(56) Entgegenhaltungen:
- DE-A1- 102020 115 748
- US-A- 3 576 162
- US-A- 3 842 260

## Beschreibung

Die Erfindung betrifft eine Presseinrichtung zum Pressen von Fleischprodukten, insbesondere gefrorenen und/oder angefrorenen Fleischprodukten, bevorzugt Frischfleischprodukten und/oder Bacon. Die Presseinrichtung umfasst eine sich entlang einer Längsrichtung erstreckende Presskammer, in welche ein zu pressendes Produkt entlang einer Einbringrichtung durch einen Eingang einbringbar ist.

Derartige Presseinrichtungen können dazu vorgesehen sein, Fleischprodukte zu komprimieren und dadurch in eine vorgesehene Form zu bringen, um diese Fleischprodukte beispielsweise nachfolgenden Verarbeitungsschritten in einer vorgesehenen oder erforderlichen Form zuführen zu können. Insbesondere können verschiedene zu verarbeitende Fleischprodukte als Naturprodukte unregelmäßig verschiedene Formen und/oder Grö-ßen aufweisen, wobei die Fleischprodukte durch das Pressen in eine standardisierte Form gebracht werden können, um beispielsweise derart zum Verkauf angeboten werden zu können.

Ferner kann es vorgesehen sein, die Fleischprodukte mittels der Presseinrichtung für weitere Verarbeitungsschritte vorzubereiten, indem beispielsweise ein Bacon in der Presseinrichtung in eine annähernd quaderförmige Form gebracht werden kann, um etwa mittels einer nachgeschalteten Aufschneidevorrichtung rechteckige Scheiben von dem Bacon abtrennen zu können. Die Scheiben können sodann zu Portionen zusammengestellt und an eine nachgelagerte Verpackungsmaschine transportiert werden, mittels derer die Portionen verpackt werden können. Insofern kann das Pressen einen von mehreren Verarbeitungsschritten einer solchen Verarbeitungslinie zum Verarbeiten von Fleischprodukten darstellen, wobei dem Pressvorgang insbesondere weitere Verarbeitungsschritte nachgelagert sein können.

Beispielsweise sind zum Pressen von Fleischprodukten geeignete Presseinrichtungen aus US 3 842 260 A und US 3 576 162 A bekannt.

Um insbesondere auch gefrorene und/oder angefrorene Fleischprodukte mittels der Presseinrichtung komprimieren zu können, sind verhältnismäßig hohe Presskräfte erforderlich. Um etwaige Verletzungen durch ein unbedarftes Eingreifen in die Presskammer während eines Pressvorgangs zuverlässig zu verhindern, ist es daher in der Regel erforderlich, die Presskammer und insbesondere den Eingang vor dem Starten eines Pressvorgangs sicher zu verschließen. Dazu kann beispielsweise der Eingang mittels einer bewegbaren Abdeckung verschlossen werden. Jedoch erschwert ein solches Verschließen des Eingangs mittels einer stabilen und daher schweren Abdeckung die Bedienung und Ergonomie einer solchen Presseinrichtung, da ein Benutzer vor jedem Einlegen eines Produkts die Abdeckung lösen und den Eingang öffnen muss, um die Abdeckung daraufhin zum Starten eines Pressvorgangs wieder schließen zu müssen. Auch die zum Pressen eines Produkts erforderliche Zeit wird durch diesen Vorgang verlängert. Gleichwohl ist es erforderlich, ein unbedarftes Eingreifen während des Pressens durch den Eingang, durch den insbesondere manuell Produkte in die Presskammer eingelegt werden können, zu vermeiden.

Es ist daher eine Aufgabe der Erfindung, eine Presseinrichtung zu schaffen, welche bei einer komfortablen Handhabung und schnellen Bedienbarkeit eine hohe Sicherheit gegenüber unbedarften Eingriffen in die Presskammer bietet.

Diese Aufgabe wird gelöst durch eine Presseinrichtung mit den Merkmalen des Anspruchs 1.

Die Presseinrichtung umfasst eine Eingangskontrolleinrichtung, welche dazu ausgebildet ist, ein sich in dem Eingang befindendes Objekt zu erfassen und ein entsprechendes Erfassungssignal auszusenden.

Indem die Presseinrichtung eine solche Eingangskontrolleinrichtung aufweist, ist es nicht zwangsläufig erforderlich, den Eingang vollständig gegen einen Zugriff durch ein Verschließen zu sichern, um einen sicheren Pressvorgang durchführen zu können. Vielmehr ermöglicht es die Eingangskontrolleinrichtung, zu erfassen, wenn sich ein Objekt und beispielsweise ein Arm oder eine Hand des Benutzers in dem Eingang befindet und somit ein Eingriff in die Presskammer droht.

Darüber hinaus kann auch überprüft werden, ob ein ungewünschtes Objekt während des Pressvorgangs durch den Eingang in die Presskammer gelangt, indem die Eingangskontrolleinrichtung beispielsweise in dem Moment, in dem das Objekt den Eingang passiert, das Erfassungssignal aussenden kann. Auch etwaige Störungen des Pressvorgangs durch anderweitige in die Presskammer eintretende Objekte, beispielsweise Werkzeuge oder Kontaminationen, die auch eine Beschädigung der Presseinrichtung zur Folge haben könnten, können daher vermieden werden.

Im Grunde kehrt die Erfindung somit für Presseinrichtungen für Fleischprodukte und insbesondere Presseinrichtungen im Lebensmittelbereich der herkömmlichen Vorgehensweise zur Sicherung des Pressvorgangs den Rücken, gemäß welcher ein Eingriff in die Presskammer während des Pressvorgangs mechanisch verhindert und so praktisch unmöglich gemacht wird und die Presskammer sowie ein Eingang zum Einbringen eines Produkts in die Presskammer während des Pressvorgangs gewissermaßen mechanisch versperrt werden. Demgegenüber verfolgt die hierin offenbarte Presseinrichtung das Konzept, den Eingang nicht zwangsläufig zu verschließen, jedoch zu überprüfen, ob ein Objekt sich in dem Eingang befindet oder den Eingang passiert, um in die Presskammer einzugreifen und/oder zu gelangen. Dies ermöglicht es sodann, auf das entsprechende Erfassungssignal zu reagieren und den Pressvorgang gegebenenfalls anzupassen und/oder zu stoppen, so dass trotz des Zugriffs durch den Eingang und/oder in die Presskammer eine Verletzung eines Benutzers und/oder eine Störung des Pressvorgangs zuverlässig vermieden werden können.

Wie bereits erläutert, ermöglicht es die hierin offenbarte Presseinrichtung somit prinzipiell, den Eingang während des Pressvorgangs offen zu lassen und einen Zugriff in die Presskammer somit grundsätzlich zu ermöglichen. Indem durch dieses Überprüfen von Bewegungen in die Presskammer und/oder durch den Eingang somit sichergestellt werden kann, dass ein solcher Eingriff somit nicht erfolgt oder der Pressvorgang gegebenenfalls entsprechend angepasst wird, um Verletzungen zu vermeiden, ist es nicht erforderlich, den Eingang insbesondere durch eine schwer zu handhabende und/oder massive Schutzabdeckung mechanisch zu verschließen. Die Bedienung und Handhabung der Presseinrichtung kann dadurch deutlich komfortabler gestaltet werden und der Pressvorgang kann beschleunigt erfolgen, indem diese Arbeitsschritte grundsätzlich eingespart werden können.

Weitere Ausführungsformen sind den abhängigen Ansprüchen, der Beschreibung und den Figuren zu entnehmen.

Bei einigen Ausführungsformen kann die Eingangskontrolleinrichtung eine Lichtschranke umfassen und dazu ausgebildet sein, das Erfassungssignal bei Unterbrechen der Lichtschranke auszusenden.

Insbesondere kann die Eingangskontrolleinrichtung somit dazu ausgebildet sein, einen Lichtstrahl in einer Ebene zu versenden, durch welche das Produkt bewegt werden muss, um in die Presskammer zu gelangen. Dieser Lichtstrahl kann beispielsweise an einer einer Lichtquelle der Lichtschranke entgegengesetzten Seite des Eingangs von einem entsprechenden Sensor detektiert oder auf die Seite der Lichtquelle zurückreflektiert und dort detektiert werden. Befindet sich ein Objekt in dem Eingang, kann sich dieses Objekt somit zwischen der Lichtquelle und dem Sensor, allgemein also zwischen den gegenüberliegenden Seiten des Eingangs, befinden, so dass einer Unterbrechung des Sensors, allgemein also der Lichtschranke, die Präsenz eines Objekts in dem Eingang zugeordnet werden kann. Dementsprechend kann die Eingangskontrolleinrichtung infolgedessen das Erfassungssignal aussenden.

Ferner kann die Eingangskontrolleinrichtung bei einigen Ausführungsformen dazu ausgebildet sein, ein Lichtgitter entlang des Eingangs zu erzeugen und das Erfassungssignal bei einer Unterbrechung des Lichtgitters auszusenden.

Insbesondere kann die Eingangskontrolleinrichtung dazu ausgebildet sein, ein Lichtgitter in einer quer zu der Einbringrichtung ausgerichteten Ebene zu erzeugen, so dass ein in die Presskammer gelangendes Objekt diese Ebene passieren muss und das Lichtgitter in einem solchen Fall unterbrochen wird. Beispielsweise kann das Lichtgitter durch mehrere parallel entlang des Eingangs und beispielsweise von einer Seite des Eingangs zu einer entgegengesetzten Seite des Eingangs ausgesandten Lichtstrahlen umfassen, so dass das Lichtgitter beispielsweise durch mehrere parallele Lichtstrahlen gebildet sein kann. Alternativ dazu kann das Lichtgitter jedoch auch weitere Lichtstrahlen umfassen, die senkrecht zu diesen Lichtstrahlen ausgerichtet sind und beispielsweise von einer Oberseite zu einer Unterseite des Eingangs verlaufen. Auch ein Lichtgitter aus lediglich von oben nach unten und parallel zueinander verlaufenden Lichtstrahlen kann vorgesehen sein.

Um ein Unterbrechen des Lichtgitters zu erfassen, kann die Eingangskontrolleinrichtung ferner jeweiligen Lichtquellen, die die genannten Lichtstrahlen aussenden, entgegengesetzt angeordnete Lichtsensoren oder Reflektoren umfassen. Insbesondere kann der Abstand zwischen jeweiligen Strahlen des Lichtgitters derart bemessen sein, dass zumindest ein in dem Eingang angeordneter menschlicher Finger zuverlässig erfasst werden kann. Auch eine Anordnung der Lichtstrahlen derart, dass eine Hand und/oder ein Arm zuverlässig erfasst werden kann, kann vorgesehen sein. Grundsätzlich kann die Sicherheit durch eine Erhöhung der Anzahl der Lichtquellen und Lichtsensoren und damit durch ein Verringern des Abstands zwischen jeweiligen Lichtstrahlen des Lichtgitters weiter erhöht werden. Das Lichtgitter kann insbesondere in einer Ebene senkrecht zu der Einbringrichtung ausgerichtet sein.

Die Eingangskontrolleinrichtung kann bei einigen Ausführungsformen eine Vielzahl von Lichtquellen umfassen, welche dazu ausgebildet sind, einen jeweiligen Lichtstrahl von einer Seite des Eingangs quer zu der Einbringrichtung zu einer zweiten Seite des Eingangs auszusenden, wobei die Eingangskontrolleinrichtung an der zweiten Seite des Eingangs für jede der Vielzahl von Lichtquellen einen zugeordneten Lichtsensor oder Reflektor aufweisen kann, welche dazu ausgebildet ist, den von der zugeordneten Lichtquelle ausgesandten Lichtstrahl zu detektieren bzw. auf einen auf der Seite der Lichtquellen, insbesondere im Bereich der jeweiligen Lichtquelle, angeordneten Sensor zu reflektieren.

Ferner kann die Eingangskontrolleinrichtung bei einigen Ausführungsform dazu ausgebildet sein, das Erfassungssignal auszusenden, wenn zumindest einer der Lichtsensoren keinen Lichtstrahl detektiert.

Mit anderen Worten kann die Eingangskontrolleinrichtung bei einigen Ausführungsformen eine Vielzahl von Lichtschranken umfassen, wobei die von den Lichtquellen der Lichtschranken ausgesandten Lichtstrahlen von der ersten Seite des Eingangs zu der zweiten Seite des Eingangs verlaufen. An der zweiten Seite des Eingangs können die jeweiligen Lichtsensoren oder Reflektoren der Lichtschranken angeordnet sein und das Erfassungssignal kann ausgesandt werden, wenn zumindest eine der Lichtschranken unterbrochen ist, wodurch erkannt werden kann, dass sich in dem Strahlengang der jeweiligen Lichtschranke ein Objekt befindet.

Die jeweiligen Lichtstrahlen können jeweils senkrecht zu der Einbringrichtung ausgerichtet sein und/oder parallel zueinander verlaufen. Ferner können die Lichtstrahlen insbesondere in der Horizontalen und/oder in der Vertikalen verlaufen.

Bei den Lichtquellen kann es sich beispielsweise jeweils um einen Laser handeln. Grundsätzlich können Lichtquellen dazu ausgebildet sein, elektromagnetische Strahlung zu emittieren, wobei diese elektromagnetische Strahlung im sichtbarem Wellenlängenbereich, im Infrarotbereich und/oder im Ultraviolettbereich liegen kann. Beispielsweise können die Lichtquellen als sichtbares rotes Licht emittierende Laser ausgebildet sein.

Bei einigen Ausführungsformen können die Lichtquellen an der ersten Seite hintereinander, insbesondere vertikal hintereinander, und die Lichtsensoren oder Reflektoren an der zweiten Seite hintereinander, insbesondere vertikal hintereinander, angeordnet sein.

Die von den Lichtquellen ausgesandten Strahlen können insbesondere parallel zueinander und horizontal verlaufen, wobei ein Abstand zwischen den Lichtquellen und/oder den von den Lichtquellen emittierten Lichtquellen insbesondere einem Abstand zwischen den Lichtsensoren bzw. Reflektoren an der zweiten Seite entsprechen kann. Insbesondere kann der Abstand zwischen den Lichtquellen und/oder den Lichtsensoren gewissermaßen eine Auflösung der Eingangskontrolleinrichtung bestimmen, indem der Abstand zwischen den Lichtquellen letztlich eine maximale Größe von Objekten definieren kann, die unbemerkt den Eingang passieren können. Insofern kann der Abstand zwischen den Lichtquellen und/oder den Lichtsensoren bzw. Reflektoren insbesondere derart gewählt sein, dass zumindest ein manueller Eingriff in die Presskammer und/oder durch den Eingang zuverlässig erkannt werden kann.

Bei einigen Ausführungsformen können die Lichtquellen und die Lichtsensoren bzw. Reflektoren in einem jeweiligen Rohr oder Stab angeordnet sein. Insbesondere kann das Rohr oder der Stab aus einem für die jeweils verwendete Wellenlänge des Lichts transparenten Material hergestellt sein, bevorzugt aus einem Kunststoff, aus Plexiglas, aus einem Metall oder aus einer Keramik. Die Wellenlänge des jeweils verwendeten Lichts muss nicht im für das menschliche Auge sichtbaren Bereich liegen.

Die Anordnung der Lichtquellen und Lichtsensoren bzw. Reflektoren in einem solchen Stab kann insbesondere einen zuverlässigen Schutz der Lichtquellen und Lichtsensoren bzw. Reflektoren gegen äußere Einflüsse und beispielsweise Feuchtigkeit bieten. Das Rohr oder der Stab kann ferner insbesondere abgedichtet sein, um einen Eintritt von Flüssigkeit zu verhindern. Insbesondere bei solchen Presseinrichtungen zum Pressen von Fleischprodukten stellt die Möglichkeit für eine effiziente Reinigung einen wichtigen Aspekt dar, wobei eine derartige Verkapselung der Lichtquellen und der Lichtsensoren bzw. Reflektoren beispielsweise eine Reinigung mittels eines Hochdruckreinigers ermöglichen kann, ohne dass Lichtquellen und/oder Lichtsensoren bzw. Reflektoren beschädigt werden.

Die Presseinrichtung kann bei einigen Ausführungsformen einen Vorderrahmen, insbesondere einen Blechrahmen, umfassen, durch welchen die Lichtquellen und die Lichtsensoren bzw. Reflektoren an einer der Presskammer abgewandten vorderen Seite abgeschirmt sind. Insbesondere können die Lichtquellen und die Lichtsensoren bzw. Reflektoren durch einen solchen Rahmen, wie bereits erläutert, vor Beschädigungen im Zuge einer Reinigung der Presskammer und der Presseinrichtung geschützt werden, die durch diesen Schutz durch einen Blechrahmen insbesondere mit einem Hochdruckreiniger und dadurch effizient und schnell durchgeführt werden kann. Der Blechrahmen kann sich beispielsweise an der ersten Seite vor einem Rohr, in welchem die Lichtquellen angeordnet sind, und an einer Oberseite des Eingangs entlang zu der zweiten Seite erstrecken, um dort wiederum vor einem Rohr, in welchem die Lichtsensoren bzw. Reflektoren angeordnet sind, zu einer Unterseite des Eingangs zu verlaufen. Darüber hinaus kann ein solcher Rahmen auch einen Schutz der Lichtquellen und/oder Lichtsensoren bzw. Reflektoren während eines Einbringens eines zu pressenden Produkts durch den Eingang oder etwaiger Wartungsarbeiten bieten, wenn mit gegebenenfalls spitzen oder schweren Werkzeugen an der Vorderseite gearbeitet wird.

Die Presseinrichtung kann ferner bei einigen Ausführungsformen einen Hinterrahmen, insbesondere Blechrahmen, umfassen, durch welchen die Lichtquellen und die Lichtsensoren bzw. Reflektoren an einer der Presskammer zugewandten Rückseite abgeschirmt sind. Durch einen solchen Hinterrahmen kann insbesondere ein Schutz der Lichtquellen erreicht werden, wenn in der Presskammer enthaltene Komponenten, insbesondere verfahrbare Presswerkzeuge, aus der Presskammer entnommen und beispielsweise gewechselt werden. Derartige Presswerkzeuge können beispielsweise aus Edelstahl und verhältnismäßig schwer gefertigt sein, so dass die Presswerkzeuge gegebenenfalls während eines manuellen Entnehmens aus der Presskammer an den Seiten des Eingangs anschlagen können, wobei eine Beschädigung der Lichtquellen und/oder der Lichtsensoren bzw. Reflektoren jedoch durch den Hinterrahmen verhindert werden kann. Auch ein zuverlässiges Funktionieren der Eingangskontrolleinrichtung kann dadurch sichergestellt werden. Umgekehrt kann der vorstehend bereits genannte Vorderrahmen die Lichtquellen beispielsweise während eines Einsetzens von Presswerkzeugen in die Presskammer schützen. Als Presswerkzeuge können insbesondere derartige Komponenten der Presseinrichtung verstanden werden, die während eines Pressvorgangs verfahren werden, um ein in der Presskammer angeordnetes Produkt zu komprimieren.

Die Lichtquellen und/oder die Lichtsensoren bzw. Reflektoren können bei einigen Ausführungsformen dreiseitig, insbesondere U-förmig, eingekapselt sein. Beispielsweise können der bereits genannte Vorderrahmen und der bereits genannte Hinterrahmen eine vorderseitige und eine rückseitige Einkapselung der Lichtquellen und/oder der Lichtsensoren bzw. Reflektoren bilden. Darüber hinaus können die Lichtquellen an einer den Lichtsensoren abgewandten Seite und die Lichtsensoren bzw. Reflektoren an einer der Lichtquellen abgewandten Seite durch einen jeweiligen weiteren Rahmenabschnitt eingekapselt sein, so dass die Lichtquellen und die Lichtsensoren bzw. Reflektoren insgesamt dreiseitig eingekapselt sein können. Eine dreiseitige und/oder U-förmige Einkapselung ermöglicht es insbesondere, die Lichtstrahlen von den Lichtquellen an der offenen Seite in Richtung der zweiten Seite des Eingangs auszusenden, wobei die Lichtsensoren bzw. Reflektoren die Lichtstrahlen an der offenen Seite und in Richtung der ersten Seite empfangen können, wohingegen die Lichtquellen und die Lichtsensoren bzw. Reflektoren an den verbleibenden drei Seiten, an welchen keine Lichtstrahlen ausgesandt oder empfangen werden, vollständig eingekapselt und dadurch gesichert sein können.

Es ist auch möglich, dass eine vierseitige Einkapselung vorliegt, wobei einzelne Durchlässe für die Lichtstrahlen eingebracht sind. Dadurch sind die Lichtquellen und/oder Lichtsensoren bzw. Reflektoren von allen Seiten vor Beschädigungen zumindest durch im Vergleich zu den Durchlässen große Gegenstände geschützt.

Die Eingangskontrolleinrichtung kann einen Eingreifschutz nicht nur durch eine oder mehrere Lichtschranken oder ein oder mehrere Lichtgitter gewährleisten, d.h. alternativ oder zusätzlich kann die Eingangskontrolleinrichtung auch eine oder mehrere andere Sicherheitseinrichtungen aufweisen, wie nachstehend dargelegt. Die bezüglich der Lichtschranken bzw. Lichtgitter hierin offenbarten Weiterbildungen sind dann auch mögliche Weiterbildungen dieser anderen Sicherheitseinrichtungen, und auch die hierin offenbarte Art und Weise der Verwendung der Signale kann mit diesen anderen Sicherheitseinrichtungen grundsätzlich ebenfalls erfolgen.

Es kann z.B. eine auf dem Boden befindliche Druckmatte vor der Presseinrichtung vorgesehen sein, die detektiert, wenn ein Benutzer vor der Presseinrichtung steht, um dann z.B. bestimmte Betriebszustände der Presseinrichtung zu unterdrücken oder einen regulären Betrieb der Presseinrichtung ganz zu unterbinden.

Es kann eine Kamera oder ein System aus mehreren Kameras vorgesehen sein, die bzw. das den Eingriffsbereich überwacht, um im Falle einer die Sicherheit gefährdenden Situation entsprechende Maßnahmen ergreift bzw. zu diesem Zweck entsprechende Signale an eine Steuereinrichtung übermittelt.

Anlog zu der optischen Funktionsweise mit Lichtschranke(n) bzw. Lichtgitter(n), wie hierin offenbart, kann ein akustischer Vorhang oder ein akustisches Gitter vorgesehen sein, das mit Schallwellen anstelle von elektromagnetischen Wellen arbeitet. Ein solches akustisches Eingreifschutzsystem kann z.B. nach dem Prinzip des Echolots arbeiten, um unerlaubte Gegenstände oder Gegenstände zu unerlaubten Zeiten an vorgegebenen Bereichen der Presseinrichtung zu erkennen.

Es können Einrichtungen zur Erzeugung von elektrischen und/oder magnetischen Feldern vorgesehen sein, deren Störung oder Veränderung durch Gegenstände oder Personen erkannt und als Gefährdung der Sicherheit nach vorgegebenen Kriterien gewertet werden kann.

Es ist auch möglich, auf Wärme reagierende Sensoren vorzusehen, welche die Anwesenheit eines menschlichen Körpers oder Körperteils erkennen können, um erforderlichenfalls Sicherheitsmaßnahmen einleiten zu können.

Ein Eingreifschutz kann auch durch einen mechanischen Vorhang bereitgestellt werden, der beispielsweise mehrere im Bereich des Eingangs angeordnete, z.B. herabhängende, und auslenkbare, beispielsweise langgestreckte, Elemente aufweisen kann und dessen Bewegungen durch geeignete Sensoren überwacht und nach vorgegebenen Kriterien als Gefährdung der Sicherheit gewertet werden können.

Die Presseinrichtung kann bei einigen Ausführungsformen eine Zustandsanzeigeeinrichtung aufweisen, welche dazu ausgebildet ist, einen Bereitschaftszustand der Presseinrichtung zum Durchführen eines Pressvorgangs anzuzeigen, beispielsweise wenn die Eingangskontrolleinrichtung kein Erfassungssignal aussendet.

Eine solche Zustandsanzeigeeinrichtung kann beispielsweise eine Lichtquelle umfassen, welche ein Signal aussendet, wenn sich kein Objekt in dem Eingang befindet und die Presskammer daher frei ist, so dass ein Pressvorgang durchgeführt werden kann. Dies kann einem Benutzer anzeigen, dass kein Störungsfall vorliegt und der Pressvorgang gestartet werden kann. Umgekehrt kann die Zustandsanzeigeeinrichtung beispielsweise dazu ausgebildet sein, ein Warnsignal auszusenden, wenn die Eingangskontrolleinrichtung ein Erfassungssignal aussendet. Ein solches Warnsignal kann beispielsweise optisch und/oder akustisch wahrnehmbar sein. Auch der Bereitschaftszustand kann optisch und/oder akustisch wahrnehmbar angezeigt werden. Beispielsweise kann die Zustandseinrichtung dazu verschiedenfarbig leuchtende Lichtquellen und/oder einen Lautsprecher umfassen, um einen Signalton und/oder eine Signaltonfolge wiedergeben zu können.

Bei einigen Ausführungsformen kann die Presskammer zumindest ein Gegenelement und ein zum Komprimieren des Produkts in Richtung des Gegenelements verfahrbares Pressmittel umfassen. Insbesondere kann das Pressmittel ein bereits genanntes Presswerkzeug umfassen, welches beispielsweise mit einem in der Presskammer verbleibenden bewegbaren Schlitten verbunden werden kann, um den Pressvorgang wunschgemäß durchführen zu können.

Das Produkt kann bei einigen Ausführungsformen über das Pressmittel hinweg in die Presskammer einbringbar sein. Insbesondere kann das Produkt durch den Eingang und über das Pressmittel hinweg in die Presskammer einbringbar sein. Das Pressmittel kann zudem entlang der Einbringrichtung verfahrbar sein, um das in die Presskammer eingebrachte Produkt zu komprimieren.

Ferner kann das Produkt bei einigen Ausführungsformen manuell in die Presskammer einbringbar sein. Insbesondere bei solchen Ausführungsformen ist folglich ein manueller Eingriff durch den Eingang und in die Presskammer erforderlich, um das Produkt in die Presskammer einzubringen. Insofern kann die Presskammer unmittelbar manuell zugänglich sein, so dass ein Eingriff während eines Pressvorgangs nach Möglichkeit verhindert und der Pressvorgang bei einem Eingriff entsprechend angepasst werden muss, um eine Verletzung des Benutzers zu verhindern. Ein solcher Eingriff kann durch die Eingangskontrolleinrichtung der hierin offenbarten Presseinrichtung zuverlässig überprüft werden, so dass Verletzungen eines Benutzers verhindert werden können.

Bei einigen Ausführungsformen kann die Presskammer während des Pressens durch den Eingang zugänglich sein. Insbesondere kann der Eingang somit bei einigen Ausführungsformen während des Pressens nicht versperrt sein und die Presseinrichtung kann insbesondere keine Schutzabdeckung umfassen, um den Eingang während des Pressens zu versperren. Zudem kann die Presseinrichtung entsprechend keine Kontrolleinrichtung aufweisen, welche das Schließen des Eingangs überprüft und einen Pressvorgang lediglich bei geschlossenem Eingang startet. Vielmehr sind Schritte zum Schließen des Eingangs nicht erforderlich, um einen Pressvorgang zu starten, sondern die Sicherheit des Benutzers wird erreicht, indem die Eingangskontrolleinrichtung einen unbedarften Eingriff in die Presskammer erfasst und der Pressvorgang entsprechend angepasst werden kann.

Die Einbringrichtung kann bei einigen Ausführungsformen quer zu der Längsrichtung ausgerichtet sein. Ferner kann die Einbringrichtung bei einigen Ausführungsformen horizontal ausgerichtet sein. Insbesondere kann die Einbringrichtung derart ausgerichtet sein, dass ein Benutzer die Produkte über eine schmale Seite in die Presskammer einbringen kann, so dass der Weg zum Einbringen eines Produkts in die Presskammer minimiert und das Einbringen dadurch erleichtert und beschleunigt werden kann. Die Längsrichtung kann dabei insbesondere durch eine Richtung definiert sein, entlang welcher die Presskammer die größte Ausdehnung aufweist. Die Längsrichtung wird ferner insbesondere in der Horizontalen verlaufen.

Die Eingangskontrolleinrichtung ist erfindungsgemäß zudem mit einer Steuereinrichtung verbunden, wobei die Steuereinrichtung dazu ausgebildet ist, das Erfassungssignal zu empfangen und einen Pressvorgang der Presseinrichtung zu steuern. Insbesondere kann die Steuereinrichtung dazu ausgebildet sein, den Pressvorgang der Presseinrichtung in Ansprechen auf das Erfassungssignal anzupassen. Beispielsweise kann die Steuereinrichtung dazu ausgebildet sein, einen bereits begonnenen Pressvorgang zu verlangsamen und/oder zu stoppen, wenn die Eingangskontrolleinrichtung ein Erfassungssignal aussendet und sich ein Objekt in dem Eingang befindet. Greift beispielsweise ein Benutzer durch den Eingang hindurch, während ein Pressvorgang durchgeführt wird, kann die Steuereinrichtung infolge des ausgesandten Erfassungssignals etwaige verfahrbare Pressmittel verlangsamen oder stoppen, so dass ein Benutzer rechtzeitig vor einer Verletzung die Hand oder den Arm wieder aus der Presskammer herausziehen kann oder die Pressmittel komplett gestoppt werden können.

Die Steuereinrichtung kann beispielsweise einen Mikroprozessor, einen Mikrochip und/oder eine CPU umfassen.

Ferner ist die Eingangskontrolleinrichtung erfindungsgemäß dazu ausgebildet, ein Freigabesignal auszusenden, wenn sich kein Objekt in dem Eingang befindet. Die Steuereinrichtung ist ferner dazu ausgebildet, den Pressvorgang bei einer vorgegebenen oder vorgebbaren zeitlichen Korrelation zwischen einem Erfassungssignal und einem darauffolgenden Freigabesignal zu starten.

Grundsätzlich kann die Eingangskontrolleinrichtung dazu ausgebildet sein, sowohl ein Signal auszusenden, wenn sich ein Objekt in dem Eingang befindet, als auch, wenn sich kein Objekt in dem Eingang befindet. Das Freigabesignal kann jedoch auch grundsätzlich durch ein Ausbleiben eines Erfassungssignals der Eingangskontrolleinrichtung definiert sein.

Insbesondere kann durch eine solche vorgegebene oder vorgebbare zeitliche Korrelation zwischen einem Erfassungssignal und einem darauffolgenden Freigabesignal ein Vorgang beschrieben werden, bei welchem ein Benutzer manuell ein Produkt in die Presskammer einbringt und dabei ein Erfassungssignal auslöst, um daraufhin die Hände wieder aus der Presskammer und dem Eingang zu entfernen, so dass der Eingang freigegeben ist und die Erfassungseinrichtung ein Freigabesignal aussendet. Die zeitliche Korrelation kann dabei insbesondere zwischen einem ersten Erfassungssignal, welches ausgelöst wird, wenn die Eingangskontrolleinrichtung einen Übergang von einem Zustand, in welchem sich kein Objekt in dem Eingang befindet, zu einem Zustand, in welchem sich ein Objekt in dem Eingang befindet, und einem ersten Freigabesignal bestehen, welches die Eingangskontrolleinrichtung aussendet, wenn der Eingang daraufhin wieder freigegeben wird. Ferner kann die zeitliche Korrelation zwischen diesen Signalen in einem Bereich gewählt sein, welcher die Dauer eines typischen Einbringvorgangs eines Produkts in die Presskammer umfasst.

Da die Steuereinrichtung dazu ausgebildet ist, den Pressvorgang infolge solcher in zeitlicher Korrelation erfasster Erfassungssignale und Freigabesignale zu starten, kann der Pressvorgang insbesondere automatisch nach dem Einlegen eines Produkts gestartet werden. Weitere Eingaben eines Benutzers sind daher nicht erforderlich, sondern der Pressvorgang kann automatisch starten, wenn das Produkt sich in der Presskammer befindet und der Eingang wieder freigegeben ist, so dass keine Gefahr für den Benutzer entsteht. Insofern ermöglicht die Ausbildung der Presseinrichtung mit einer Eingangskontrolleinrichtung eine intelligente Steuerung der Presseinrichtung, so dass auf einzelne und separat nach dem Einbringen des Produkts in die Presskammer einzugebende Steuerbefehle verzichtet werden kann. Auch dadurch kann der Pressvorgang erleichtert und beschleunigt werden.

Es kann jedoch alternativ oder zusätzlich auch vorgesehen sein, dass der Pressvorgang durch einen gezielten Benutzerbefehl startbar ist. Beispielsweise kann an der Presseinrichtung dazu ein Knopf und/oder Schalter vorgesehen sein, wobei der Pressvorgang infolge einer Betätigung des Knopfes und/oder Schalters geschaltet werden kann. Es kann auch vorgesehen sein, dass ein Benutzer zwischen einer Steuerung auf Basis der zeitlichen Korrelation und einem manuellen bzw. gezielten Starten des Pressvorgangs wählen kann. Darüber hinaus kann eine Steuerung beispielsweise über einen Touchscreen vorgesehen sein.

Die Steuereinrichtung kann bei einigen Ausführungsformen dazu ausgebildet sein, den Pressvorgang in Ansprechen auf das Erfassungssignal zu verlangsamen. Insbesondere kann die Steuereinrichtung dazu ausgebildet sein, einen laufenden Pressvorgang in Ansprechen auf das Erfassungssignal zu verlangsamen.

Alternativ kann vorgesehen sein, in Ansprechen auf das Erfassungssignal bereits eine langsame Vorpositionierung wenigstens eines Pressmittels zu starten. Dabei kann der Vorgang dann beschleunigt werden, sobald ein Freigabesignal erfolgt. Es ist auch möglich, wenigstens eine Dimension des Produktes zu messen und darauf basierend mit einem Puffer nur so weit eine Vorpositionierung durchzuführen, dass keine Quetschgefahr für einen Benutzer besteht. Dieses Vermessen des Produktes kann z.B. beim Einlegen des Produktes erfolgen, beispielsweise durch eine Kamera oder auch durch die Anzahl von unterbrochenen Lichtstrahlen eines Lichtgitters, wie hierin offenbart, wenn der Abstand zwischen den Lichtstrahlen bekannt ist. Dadurch kann dann auf die ungefähre Größe des Produktes geschlossen werden. Alternativ kann eine Kamera erfassen, wie viele Punkte der unterbrochenen Lichtstrahlen auf dem Produkt zu sehen sind, und dabei z.B. auch die Position der Hände eines Benutzers mit einbeziehen. Das Erkennen der Hände kann z.B. durch eine bestimmte Handschuhfarbe möglich sein.

Wenn die Steuereinrichtung ein Erfassungssignal empfängt und dadurch die Information an die Steuereinrichtung übermittelt wird, dass sich ein Objekt in dem Eingang befindet, kann der Pressvorgang somit verlangsamt werden, um es einem Benutzer insbesondere zu ermöglichen, eine Hand oder einen Arm rechtzeitig wieder aus der Presskammer herauszuziehen, bevor eine Verletzung erfolgt. Jedoch ist es nicht zwangsläufig erforderlich, den Pressvorgang komplett zu stoppen, da bei einer ausreichenden Verlangsamung eine dann ausreichend schnelle Reaktion des Benutzers zuverlässig ermöglicht wird. Hierzu können etwaige Pressmittel insbesondere mittels ausreichend schnell und genau ansteuerbarer Antriebe, beispielsweise mittels Elektromotoren und/oder Servomotoren, antreibbar sein bzw. die Presseinrichtung kann solche Antriebe und/oder Elektromotoren und/oder Servomotoren umfassen.

Ferner kann die Steuereinrichtung bei einigen Ausführungsformen dazu ausgebildet sein, den Pressvorgang in Ansprechen auf das Erfassungssignal zu stoppen. Insofern kann die Steuereinrichtung auch dazu ausgebildet sein, einen laufenden Pressvorgang komplett anzuhalten, wenn die Eingangskontrolleinrichtung ein Erfassungssignal meldet. Auch dadurch kann ein möglicherweise während des Pressvorgangs in die Presskammer eingreifender Benutzer zuverlässig vor Verletzungen geschützt werden. Gegebenenfalls kann die Steuereinrichtung auch dazu ausgebildet sein, den Pressvorgang in Ansprechen auf das Erfassungssignal zunächst zu verlangsamen und schließlich zu stoppen, falls nach einer vorgegebenen Zeit immer noch ein Erfassungssignal empfangen wird und somit nach wie vor ein Objekt in dem Eingang angeordnet ist.

Die Erfindung bezieht sich ferner auf ein Verfahren nach Anspruch 13 zum Steuern einer Presseinrichtung zum Pressen von Fleischprodukten, insbesondere gefrorenen und/oder angefrorenen Fleischprodukten, bevorzugt Frischfleischprodukten und/oder Bacon, mittels einer Presseinrichtung wie hiermit offenbart. Bei dem Verfahren wird ein Produkt durch einen Eingang in eine Presskammer der Presseinrichtung eingebracht und der Pressvorgang wird in Ansprechen auf ein Erfassungssignal einer Eingangskontrolleinrichtung, welche dazu ausgebildet ist, ein sich in dem Eingang befindliches Objekt zu erfassen, und auf ein darauffolgendes Freigabesignal der Eingangskontrolleinrichtung, welches anzeigt, dass sich kein Objekt in dem Eingang befindet, gestartet.

Wie bereits erläutert, kann der Pressvorgang dadurch insbesondere automatisch gestartet werden, wenn ein Produkt in die Presskammer eingebracht wird und der Eingang wieder von dem Benutzer freigegeben wird, so dass keine Gefahr für den Benutzer besteht. Insofern kann der Pressvorgang in Ansprechen auf das Erfassungssignal und das darauffolgende Freigabesignal insbesondere automatisch gestartet werden. Ferner kann vorgesehen sein, dass der Pressvorgang lediglich bei einer vorgegebenen oder vorgebbaren zeitlichen Korrelation zwischen dem Erfassungssignal und dem darauffolgenden Freigabesignal gestartet wird, wie vorstehend bereits erläutert ist.

Ferner kann es bei einigen Ausführungsformen vorgesehen sein, dass der Pressvorgang in Ansprechen auf ein weiteres Erfassungssignal verlangsamt wird. Insbesondere kann somit ein laufender Pressvorgang verlangsamt werden, wenn ein weiteres Erfassungssignal ausgesandt wird. Ein solches weiteres Erfassungssignal kann anzeigen, dass sich ein Objekt in dem Eingang befindet, obwohl der Pressvorgang noch läuft, so dass gegebenenfalls ein Benutzer in die Presskammer eingegriffen haben könnte. Indem der Pressvorgang in Ansprechen auf ein solches weiteres Erfassungssignal verlangsamt wird, wird dem Benutzer jedoch eine Reaktion ermöglicht, um beispielsweise seine Hand wieder aus der Presskammer herauszuziehen.

Alternativ oder zusätzlich kann es bei einigen Ausführungsformen vorgesehen sein, dass der Pressvorgang in Ansprechen auf das weitere Erfassungssignal gestoppt wird. Beispielsweise kann der Pressvorgang zunächst verlangsamt werden, um jedoch komplett gestoppt zu werden, wenn nach einer vorgegebenen oder vorgebbaren Zeit nach wie vor ein Erfassungssignal ausgesandt wird. Es kann jedoch auch vorgesehen sein, dass der Pressvorgang unmittelbar komplett gestoppt wird und etwaige verfahrbare Pressmittel angehalten werden, sobald während eines laufenden Pressvorgangs ein Erfassungssignal ausgesandt wird und ein sich in dem Eingang befindendes Objekt erkannt wird.

Die Erfindung betrifft ferner eine Presseinrichtung nach Anspruch 1 zum Pressen von Fleischprodukten, insbesondere gefrorenen und/oder angefrorenen Fleischprodukten, bevorzugt Frischfleischprodukten oder Bacon, mit einer sich entlang einer Längsrichtung erstreckenden Presskammer, in welcher ein zu pressendes Produkt einbringbar ist. Die Presskammer umfasst ein zum Komprimieren des Produkts vertikal verfahrbares Pressmittel, wobei die Presseinrichtung ferner einen ersten Motor und einen zweiten Motor umfasst, welche dazu ausgebildet sind, das Pressmittel zu verfahren.

Wie vorstehend bereits erläutert ist, kann es bei einigen Presseinrichtungen vorgesehen sein, dass ein Produkt manuell und beispielsweise über ein in einer horizontalen Ebene verfahrbares Pressmittel hinweg in die Presskammer eingebracht wird. Dazu ist jedoch in vertikaler Richtung ein ausreichender Freiraum erforderlich, so dass das Produkt über das Pressmittel hinweg in die Presskammer eingebracht werden kann. Insbesondere kann ein solches Einbringen durch den vorstehend bereits genannten Eingang erfolgen.

Indem jedoch ein solcher ausreichender vertikaler Freiraum zur Verfügung stehen muss, muss das vertikal verfahrbare Pressmittel diesen Freiraum während des Pressvorgangs überbrücken, um das Produkt in der Presskammer komprimieren zu können. Wenn jedoch das Pressmittel während des gesamten Verfahrweges mit einem lediglich langsam rotierenden und/oder durch ein entsprechendes Getriebe stark verlangsamten Motors angetrieben wird, kann dadurch der Pressvorgang unangemessen verlangsamt werden.

Indem bei der vorstehend erläuterten Presseinrichtung jedoch zwei Motoren vorgesehen sind, um das vertikal verfahrbare Pressmittel anzutreiben, kann beispielsweise einer der Motoren dazu ausgebildet sein, das Pressmittel schnell zu verfahren, wohingegen der andere Motor dazu ausgebildet sein kann, die zum Pressen erforderliche Kraft zu entwickeln. Insofern kann das Pressmittel beispielsweise mittels des schnell drehenden und lediglich geringe Kraft entfaltenden Motors nach dem Einbringen des Produkts in die Presskammer gewissermaßen vorpositioniert werden, wobei der eine große Kraft entfaltende, das Pressmittel jedoch lediglich langsam bewegende, andere Motor genutzt werden kann, kurz bevor oder sobald das Pressmittel in Anlage mit dem Produkt gelangt, um das Produkt zu komprimieren. Dadurch kann der Pressvorgang beschleunigt erfolgen.

Insbesondere kann es bei einigen Ausführungsformen vorgesehen sein, dass der erste Motor und der zweite Motor dazu ausgebildet sind, das vertikal verfahrbare Pressmittel vertikal nach unten zu bewegen. Insofern können der erste Motor und der zweite Motor das Pressmittel insbesondere nach unten ziehen.

Ferner kann es bei einigen Ausführungsformen vorgesehen sein, dass der erste Motor dazu ausgebildet ist, das Pressmittel relativ zu dem zweiten Motor schneller zu verfahren, wobei der zweite Motor dazu ausgebildet sein kann, relativ zu dem ersten Motor eine größere Kraft zu entfalten. Wie bereits erläutert, kann der erste Motor dazu benutzt werden, das Pressmittel schnell zu verfahren und insbesondere vorzupositionieren, wohingegen der zweite Motor dazu benutzt werden kann, das Pressmittel während des eigentlichen Pressvorgangs zum Komprimieren des Produkts zu verfahren.

Die Presseinrichtung kann bei einigen Ausführungsformen eine Steuereinrichtung aufweisen, welche dazu ausgebildet ist, zum Pressen des in die Presskammer eingebrachten Produkts das Pressmittel zunächst durch ein Steuern des ersten Motors vorzupositionieren und sodann durch ein Steuern des zweiten Motors zu komprimieren. Insbesondere kann das Vorpositionieren ein Verfahren des Pressmittels bis in Anlage an das Produkt umfassen.

Bei einigen Ausführungsformen kann der zweite Motor zum Komprimieren des Produkts zukuppelbar sein. Insbesondere kann der erste Motor bei solchen Ausführungsformen während des Pressens des Produktes weiterlaufen, wobei der von dem ersten Motor während des Pressens übertragene Kraftbeitrag gegenüber dem Beitrag des zweiten Motors vernachlässigbar sein kann. Auch der zweite Motor kann gegebenenfalls während des gesamten Verfahrens des Pressmittels laufen, jedoch erst nach einem Vorpositionieren des Pressmittels derart mit dem Pressmittel gekuppelt werden, dass eine Kraft von dem zweiten Motor auf das Pressmittel übertragen wird.

Im Rahmen der vorliegenden Offenbarung ist unter "Kuppeln" allgemein sowohl das Herstellen (= "Zukuppeln" oder "Einkuppeln") und Lösen (= "Auskuppeln" oder "Entkuppeln") einer kraft- oder formschlüssigen Verbindung, insbesondere unter Verwendung einer Kupplungseinrichtung, als auch ein einfaches Zu- oder Einschalten (= "Zukuppeln" oder "Einkuppeln") und Ab- oder Ausschalten ("Auskuppeln" oder Entkuppeln") zu verstehen. Ein ausgeschalteter und somit im Sinne dieser Bedeutung ausgekuppelter Elektromotor beispielsweise kann weiterhin form- oder reibschlüssig mit einem anderen Element, z.B. mit einem Übertragungselement wie beispielweise einem Zahnriemen, verbunden sein, ohne jedoch eine Kraft oder ein Drehmoment übertragen zu können.

Der erste und der zweite Motor können bei einigen Ausführungsformen dazu ausgebildet sein, einen Spindeltrieb anzutreiben. Ferner können der erste Motor und der zweite Motor als Elektromotoren und/oder als Servomotoren ausgebildet sein. Insbesondere eine Ausbildung als Servomotor ermöglicht jeweils eine präzise Prozessüberwachung und Steuerung.

Bei einigen Ausführungsformen können der erste Motor und der zweite Motor über ein jeweiliges Getriebe mit dem Pressmittel verbunden sein. Insbesondere kann mittels der Getriebe eine Untersetzung der Drehzahl des ersten Motors und des zweiten Motors ins Langsame erfolgen, um die erforderlichen Presskräfte zu generieren. Dies ermöglicht es insbesondere auch, den Pressvorgang mittels schnelldrehender Elektromotoren durchzuführen und dennoch die erforderlichen Drehmomente aufzubringen. Das dem zweiten Motor zugeordnete Getriebe kann insbesondere eine stärkere Untersetzung bzw. Übersetzung der Drehzahl des zweiten Motors ins Langsame hervorrufen als das dem ersten Motor zugeordnete Getriebe, so dass die durch den zweiten Motor übertragbare Kraft gegenüber der durch den ersten Motor übertragbaren Kraft erhöht sein kann. Beispielsweise können die Getriebe als Planetengetriebe ausgebildet sein.

Bei einigen Ausführungsformen kann das Produkt quer zu der Vertikalen durch einen Eingang in die Presskammer einbringbar sein. Insbesondere kann das Produkt manuell in die Presskammer einbringbar sein. Wie bereits erläutert, kann der dazu erforderliche Freiraum in vertikaler Richtung insbesondere durch den schnelldrehenden bzw. eine schnelle Rotation übertragenden ersten Motor überbrückt werden, bevor der Pressvorgang mittels des eine relativ große Kraft übertragenden zweiten Motors durchgeführt werden kann.

Die Erfindung betrifft ferner eine Presseinrichtung nach Anspruch 1 zum Pressen von Fleischprodukten, insbesondere gefrorenen und/oder angefrorenen Fleischprodukten, bevorzugt Frischfleischprodukten und/oder Bacon, mit einer sich entlang einer Längsrichtung erstreckenden Presskammer, in welcher ein zu pressendes Produkt einbringbar ist. Die Presskammer umfasst ein zum Komprimieren des Produkts mittels eines Antriebs verfahrbares Pressmittel, wobei das Produkt in der Presskammer auf einer Pressebene auflegbar ist. Ferner umfasst der Antrieb einen unterhalb der Pressebene angeordneten Motor, wobei der Motor in einem geschlossenen Gehäuse angeordnet ist.

Indem der Motor unter der Pressebene angeordnet ist, kann eine Kontamination des Produkts in der Presskammer, beispielsweise durch von dem Motor herablaufendes oder herabtropfendes Schmiermittel, zuverlässig vermieden werden. Die Anordnung des Motors in einem geschlossenen Gehäuse wiederum ermöglicht zunächst, eine Kontamination des Motors, etwa durch während des Pressvorgang aus dem Produkt austretende Flüssigkeiten, zu vermeiden.

Darüber hinaus ermöglicht die Anordnung des Motors in einem geschlossenen Gehäuse auch, den Motor vor etwaigen Einflüssen in einem Raum, in welchem die Presseinrichtung angeordnet ist, zu schützen. Insbesondere kann dadurch verhindert werden, dass der Motor Kontaminationen durch die Raumluft ausgesetzt ist, welche gegebenenfalls eine Schädigung des Motors zur Folge haben könnten. Vielmehr kann der Motor in einem exakt kontrollierbaren geschlossenen Gehäuse vor etwaigen Beeinträchtigungen geschützt werden. Bei einigen Ausführungsformen kann in dem Gehäuse eine Luftstromeinrichtung zum Erzeugen eines Luftstroms angeordnet sein. Insbesondere kann die Luftstromeinrichtung dazu dienen, von dem in dem Gehäuse angeordneten Motor erzeugte Wärme in dem Gehäuse zu verteilen, so dass die Wärme gleichmäßig über Außenwände des Gehäuses nach außen abgegeben werden kann. Eine Überhitzung des Motors kann dadurch verhindert werden.

Die Luftstromeinrichtung kann bei einigen Ausführungsformen dazu ausgebildet sein, einen Ringstrom zu erzeugen. Insofern kann die Luftstromeinrichtung dazu ausgebildet sein, einen Luftstrom zu erzeugen, welcher sich auf einem Ring, also auf einem geschlossenen, umlaufenden Strömungspfad, innerhalb des Gehäuses und/oder entlang von Wänden des Gehäuses bewegt. Ein solcher Ringstrom kann insbesondere von dem Motor erzeugte Wärme gleichmäßig entlang der Wände des Gehäuses verteilen, so dass die Wärme gleichmäßig über diese Wände nach außen abgegeben werden kann.

Die Luftstromeinrichtung kann bei einigen Ausführungsformen ein Gebläse umfassen, welches dazu ausgebildet ist, durch Erzeugen des Luftstroms von dem Antrieb generierte Wärme in dem Gehäuse zu verteilen.

Der Motor kann bei einigen Ausführungsformen als Elektromotor ausgebildet sein. Insbesondere kann ein solcher Elektromotor mit verhältnismäßig geringen Wärmeverlusten betrieben werden, so dass eine Überhitzung des Motors und/oder des Gohäuses trotz des fehlenden I uftaustauschs vermieden werden kann.

Es kann vorgesehen sein, dass ein Gebläse einem Motor zugeordnet wird, z.B. weil es eine räumliche Nähe zu diesem Motor besitzt. Das Gebläse kann dann z.B. in Abhängigkeit von bestimmten Messwerten, z.B. der Motortemperatur oder anderen Werten (beispielsweise Gehäuse-/ Lufttemperatur eines benachbarten Gehäuseabschnitts), betrieben werden, um die Wärme gleichmäßig im Gehäuse zu verteilen.

Durch das geschlossene Gehäuse kann zudem ein Eintritt von Feuchtigkeit dadurch vermieden werden, dass kein Luftaustausch erfolgt.

Das Gehäuse kann bei einigen Ausführungsformen in Richtung der Pressebene abgedichtet sein. Insbesondere kann durch eine solche Abdichtung der Eintritt von Produktteilen und/oder Flüssigkeiten in das Gehäuse verhindert werden. Vielmehr können sich während des Pressens von dem Produkt lösende Teile und/oder austretende Flüssigkeit z.B. über ein Blech oder eine Fläche oberhalb des Gehäuses, in welchem der Motor angeordnet ist, abgeführt werden.

Die Presskammer kann bei einigen Ausführungsformen ein erstes Pressmittel, welches entlang der Längsrichtung in Richtung eines ersten Gegenelements verfahrbar ist, ein zweites Presswerkzeuge, welches horizontal und quer zu der Längsrichtung in Richtung eines zweiten Gegenelements verfahrbar ist, und ein drittes Pressmittel umfassen, welches entlang der Vertikalen in Richtung eines dritten Gegenelements verfahrbar ist. Die Presseinrichtung kann ferner für jedes der Pressmittel einen Antrieb mit zumindest einem jeweiligen Motor umfassen, wobei die Motoren unter der Pressebene und in einem geschlossenen Gehäuse angeordnet sein können.

Insbesondere kann die Presseinrichtung somit dazu ausgebildet sein, Produkte in drei Dimensionen zu komprimieren. Die Längsrichtung kann ferner entlang einer Richtung ausgerichtet sein, in welcher die Presskammer die größte Erstreckung aufweist. Zudem kann die Längsrichtung horizontal ausgerichtet sein.

Indem sämtliche Motoren zum Verfahren der Pressmittel unterhalb der Pressebene angeordnet sein können, kann, wie bereits erläutert, eine Kontamination der Produkte in der Presskammer, beispielsweise durch austretendes Schmiermittel, verhindert werden. Die Anordnung der Motoren in dem geschlossenen Gehäuse verhindert umgekehrt eine Kontamination der Motoren. Von den Motoren generierte Wärme kann, wie bereits erläutert, insbesondere durch die Anordnung in der Luftstromeinrichtung in dem Gehäuse gleichmäßig über die Außenwände des Gehäuses abgeführt werden. Ferner können die Motoren durch die Anordnung in dem geschlossenen Gehäuse vor Feuchtigkeit und/oder Korrosion geschützt werden.

Was mögliche Dimensionierungen der Presseinrichtung betrifft, insbesondere gemäß der vorstehend erläuterten möglichen Ausführungsformen und/oder gemäß des nachstehend anhand der Figuren näher beschriebenen Ausführungsbeispiels, so kann die Presseinrichtung eine oder mehrere der folgenden Merkmale aufweisen, wobei diese Merkmale, sofern nichts anderes erwähnt ist, insbesondere bei solche Ausführungsformen einer Presseinrichtung verwirklicht sein können, die zum Pressen von Bacon dienen:
Die Presseinrichtung kann für maximale Produktabmessungen mit einer sich senkrecht zur Längsrichtung erstreckenden Produktbreite von etwa 350mm, einer parallel zur Längsrichtung verlaufenden Produktlänge von etwa 800mm und einer Produkthöhe von etwa 150mm ausgeführt sein.

Was die äußeren Abmessungen der Presseinrichtung betrifft, so kann diese eine Breite von etwa 100cm und eine Länge von etwa 270cm aufweisen. Eine Breite von etwa 100cm, was vergleichsweise schmal ist, kann insbesondere durch die hierin offenbarte Art und Weise des Antriebs für das in Richtung der Breite verfahrbare Pressmittel erreicht werden und kann auch in anderer, insbesondere ästhetischer Hinsicht von Vorteil sein, nämlich insbesondere dann, wenn andere Komponenten einer Verarbeitungslinie zumindest ungefähr die gleiche Breite aufweisen. Bekannte Bacon-Slicer beispielsweise besitzen ebenfalls eine Breite von etwa 100cm, so dass sich die hierin offenbarte Presseinrichtung in eine entsprechende Verarbeitungslinie optimal einpassen kann. Die Presseinrichtung kann auch mit einer Breite von bis zu etwa 130cm bis 140cm realisiert werden, um breitere Produkte komprimieren zu können, wie es etwa für das Komprimieren von Bacon auf dem US-Markt erforderlich sein kann. Eine Länge von 270cm ist im Vergleich zu bekannten Presseinrichtungen mit ähnlichen Leistungen und für ähnliche Anwendungen relativ gering, womit Platz in Längsrichtung eingespart werden kann. Die Beladehöhe, also diejenige Höhe, in welche ein Benutzer ein zu komprimierendes Produkt mindestens anheben muss, um es in die Presskammer der Presseinrichtung einzubringen, kann im Bereich von etwa 100cm bis 120cm über dem Boden liegen, insbesondere je nach Einstellung von in der Höhe verstellbaren Standfüßen, mit denen die Presseinrichtung auf dem Boden steht. Auch diese relativ niedrige, ergonomisch günstige und für den Benutzer somit entlastende Beladehöhe kann durch die hierin offenbarte Art und Weise des Antriebs für das in Richtung der Breite verfahrbare Pressmittel erreicht werden. Diese Beladehöhe kann durch die Oberseite einer insbesondere verschwenkbaren und/oder entnehmbaren Schutzabdeckung für das in Richtung der Breite verfahrbare Pressmittel definiert sein, wenn das Beladen über diese Schutzabdeckung hinweg erfolgt.

Die Pressmittel für das Komprimieren der Produkte in den unterschiedlichen Richtungen können so ausgelegt sein, dass sie dauerhaft maximalen Belastungen widerstehen können wie folgt: Komprimieren in vertikaler Richtung: etwa 25 Tonnen, entspricht also etwa einer Kraft von 250kN; Komprimieren in Längsrichtung: etwa 4 Tonnen, entspricht also etwas einer Kraft von 40kN; Komprimieren in Breitenrichtung, also senkrecht zur Längsrichtung: etwa 8 Tonnen, entspricht also etwa einer Kraft von 80kN.

Die Erfindung betrifft des Weiteren einen unabhängigen Aspekt, nämlich die Verwendung eines Motors oder mehrerer, z.B. zweier, Motoren, der bzw. die zum Verfahren eines Pressmittels einer Presseinrichtung wie hierin offenbart, dient bzw. dienen, zum Kontrollieren der Funktionsfähigkeit eines Übertragungselementes, beispielsweise eines Zahnriemens, über den der Motor bzw. die Motoren das Pressmittel verfährt bzw. verfahren. Die Kontrolle der Funktionsfähigkeit des Übertragungselementes erfolgt dadurch, dass dieses mittels des Motors oder der Motoren gedehnt und dabei durch Auswerten von Signalen des Motors oder zumindest eines des Motors ein Messwert für die Dehnung ermittelt und mit einem Referenzwert verglichen wird. Dabei wird der Motor bzw. werden die Motoren gewissermaßen als Messgerät verwendet, sodass keine zusätzlichen Messinstrumente erforderlich sind, um die Funktionsfähigkeit des Übertragungselementes zu überprüfen.

Um das Übertragungselement dehnen zu können, muss das Übertragungselement an zwei beabstandeten Stellen beaufschlagt werden.

Dies kann z.B. durch zwei Motoren erfolgen, von denen entweder beide das Übertragungselement in entgegensetzte Richtungen beaufschlagen oder von denen einer das Übertragungselement beaufschlagt und der andere das Übertragungselement lediglich festhält und insofern als Bremse oder Anschlag wirksam ist.

Alternativ kann die Presseinrichtung zum Verfahren des jeweiligen Pressmittels lediglich einen einzigen Motor aufweisen, der mit dem Pressmittel über das Übertragungselement antriebswirksam verbunden ist. Zum Kontrollieren der Funktionsfähigkeit des Übertragungselementes ist dann zusätzlich eine zwischen einer passiven und einer aktiven Stellung bewegbare oder zwischen einem unwirksamen und einem wirksamen Zustand schaltbare, mechanische oder elektrische Brems- oder Halteeinrichtung vorgesehen, die an einer beliebigen Stelle in den Antriebsstrang eingreift, um das Übertragungselement direkt oder indirekt festhalten zu können. Die Brems- oder Halteeinrichtung kann z.B. an dem Übertragungselement, an dem Pressmittel (z.B. einfach als in den Verfahrweg des Pressmittels bewegbarer, mittels einer Steuereinrichtung ansteuerbarer mechanischer Anschlag) oder an einem im Antriebsstrang zwischen Übertragungselement und Pressmittel befindlichen Antrieb, z.B. einem Linearantrieb, insbesondere einem Spindeltrieb, angreifen. Wenn z.B. das Übertragungselement als Zahnriemen ausgebildet ist, kann die Brems- oder Halteeinrichtung ein normalerweise frei mitlaufendes Zahnrad sein, welches von einer Steuereinrichtung vorübergehend zum Kontrollieren der Funktionsfähigkeit des Zahnriemens blockiert werden kann, um den Zahnriemen festzuhalten.

Diesem Konzept liegt die Idee zugrunde, dass ein beispielsweise beschädigtes, z.B. angerissenes, Übertragungselement sich unter ansonsten gleichen Bedingungen weiter dehnen lässt als ein intaktes Übertragungselement, also der Beaufschlagung einen geringeren Widerstand entgegensetzt, wobei ein durchgerissenes Übertragungselement der Beaufschlagung praktisch gar keinen Widerstand mehr entgegensetzt. Diese Abweichungen von dem normalen, erwarteten Verhalten eines intakten Übertragungselementes können mit dem erfindungsgemäßen Kontroll-Konzept erkannt werden.

Ergibt diese Kontrolle, dass das Übertragungselement funktionsfähig ist, besteht ein viel geringeres Risiko, dass das Übertragungselement gerade dann versagt, wenn es in einer sicherheitsrelevanten Situation benötigt wird, um das Pressmittel in einer jeweiligen Stellung zu halten. In einer solchen Situation ist nämlich der Motor bzw. der jeweils aktive Motor abgeschaltet, und es wird davon ausgegangen, dass ein funktionsfähiges Übertragungselement das Pressmittel in seiner jeweiligen momentanen Position halten kann.

In Abhängigkeit davon, wie stark ein jeweiliger Messwert von einem Referenzwert abweicht, können unterschiedliche Maßnahmen getroffen werden. Bei einer relativ großen Abweichung kann beispielweise ein Betrieb der Presseinrichtung von der Steuereinrichtung unterbunden werden, bis der Steuereinrichtung von einem Benutzer bestätigt wird, dass das Übertragungselement ausgetauscht worden ist. Bei einer relativ kleinen Abweichung, aufgrund welcher nicht von einem baldigen Versagen des Übertragungselementes ausgegangen werden muss, kann beispielsweise von der Steuereinrichtung ein Signal ausgegeben oder eine sonstige Meldung erzeugt werden, durch die entweder dem Benutzer oder dem Hersteller der Presseinrichtung signalisiert wird, dass ein baldiger Wechsel des Übertragungselementes erforderlich werden kann, und die Steuereinrichtung kann zum Beispiel häufigere Überprüfungen fordern oder automatisch selbst durchführen, um eine engmaschigere Überprüfung des Übertragungselementes sicherzustellen.

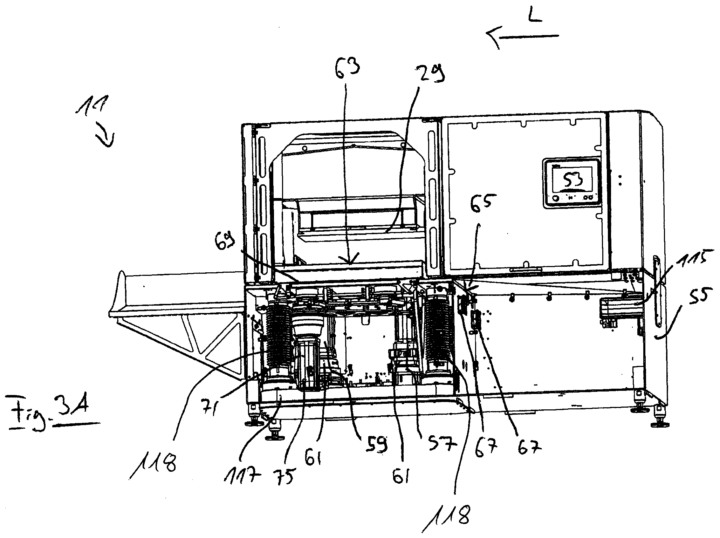

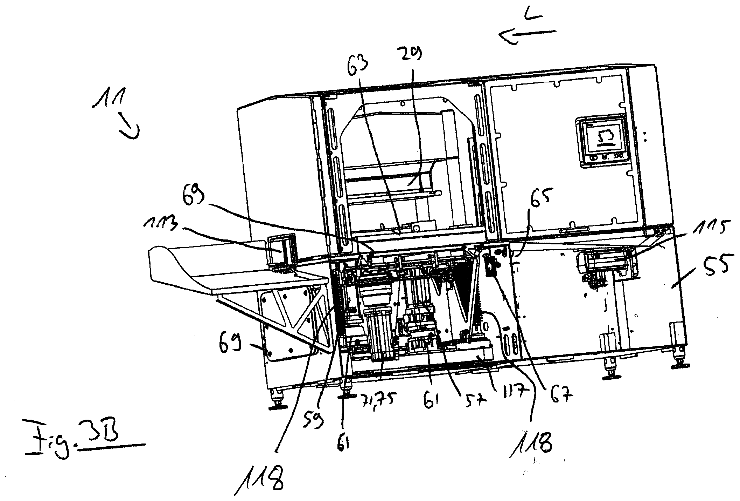

Wie näher anhand eines Ausführungsbeispiels in Verbindung mit den Fig. 3A und 3B beschrieben wird, ist dieser Aspekt der Erfindung besonders dann vorteilhaft, wenn es sich bei dem Pressmittel um ein vertikal verfahrbares Mittel handelt und die Presseinrichtung eine als Eingriffsschutz für Benutzer dienende Eingangskontrolleinrichtung wie z.B. ein Lichtgitter umfasst, die dazu dient, bei Erfassung eines im Eingang der Presse befindlichen Objektes den momentanen Pressvorgang zu unterbrechen. Das Unterbrechen des Pressvorgangs kann durch Abschalten des jeweils aktiven Motors oder beider Motoren für das vertikale Pressmittel erfolgen, wobei das Pressmittel aber eben nur dann in seiner Position verbleibt, wenn das Übertragungselement funktionsfähig ist. Sollte ein bereits beschädigtes Übertragungselement beispielsweise gerade dann reißen, wenn durch Abschalten des gerade aktiven Motors ein sicherer Zustand hergestellt werden soll, ist die Sicherheit der Presseinrichtung tatsächlich nicht gegeben, da das Presselement nicht mittels der angehaltenen Motoren und eines intakten Übertragungselementes gehalten werden kann.

Dieser Aspekt der Erfindung kann mit den anderen unabhängigen Aspekten der vorliegenden Offenbarung kombiniert werden, d.h. die hierin offenbarten Presseinrichtungen können alternativ oder zusätzlich diese in den entsprechenden Ansprüchen näher definierte Funktionalität aufweisen. Dies gilt auch für das diesen Aspekt der Kontrolle der Funktionsfähigkeit des Übertragungselementes betreffende Verfahren.

Im Zusammenhang mit diesem Aspekt der Erfindung betrifft die Erfindung alternativ eine Presseeinrichtung nach Anspruch 1, die sich unter anderem dadurch auszeichnet, dass eine Steuereinrichtung vorgesehen ist, die dazu ausgebildet ist, zur Kontrolle der Funktionsfähigkeit des Übertragungselementes den ersten Motor und den zweiten Motor derart zu steuern und/oder zu regeln, dass das Übertragungselement mittels des ersten Motors und des zweiten Motors in Richtung einer Dehnung des Übertragungselementes beaufschlagt wird, und die weiter dazu ausgebildet ist, einen dabei, also während des Beaufschlagens des Übertragungselementes in Richtung einer Dehnung, durch Auswerten von Signalen des ersten Motors und/oder des zweiten Motors ermittelten Messwert für die Dehnung mit einem Referenzwert für die Dehnung zu vergleichen.

Dieses Konzept ist insbesondere mit Servomotoren möglich, sodass gemäß einem möglichen Ausführungsbeispiel der erste Motor und der zweite Motor jeweils als Servomotor ausgebildet sind. Servomotoren erlauben die Bestimmung der Winkel-position der Motorwelle, d.h. ein Servomotor ist mit einem Geber versehen, der die aktuelle Position des Motors bestimmt, beispielsweise den zurückgelegten Drehwinkel der Motorwelle bezüglich einer Anfangsposition. Bei einer Positions- oder Lageregelung eines Servomotors beispielsweise vergleicht die dem Servomotor zugeordnete Regelung das Signal des Gebers wiederholt mit einem vorgegebenen Positions-Sollwert. Bei einer Abweichung vom Sollwert wird die Motorwelle in die entsprechende Richtung gedreht, bis die jeweils gewünschte Sollposition der Motorwelle erreicht ist.

Durch geeignetes, in vielfältiger Weise mögliches Zusammenwirken der beiden Motoren kann folglich mittels eines funktionsfähigen Übertragungselementes durch Betreiben der Motoren im Sinne einer Dehnung des Übertragungselementes ein Referenzwert für die Dehnung bestimmt werden. Während des Betriebs der Presseinrichtung, entweder außerhalb oder während eines tatsächlichen Pressvorgangs, kann dann jeweils unter gleichen Bedingungen erneut eine Dehnung mittels der beiden Motoren erfolgen, wobei eine Abweichung des dabei ermittelten Messwertes für die Dehnung von dem zuvor ermittelten Referenzwert dahingehend gewertet werden kann, dass das Übertragungselement nicht funktionsfähig ist, also beispielsweise beschädigt oder gar durchgerissen ist.

Bevorzugt ist das Übertragungselement ein endloses Element, das um die beiden Motoren und um das

Pressmittel, insbesondere um einen oder mehrere Antriebe, z.B. Spindeltriebe, für das Pressmittel, umläuft. Es befinden sich folglich zwei Abschnitte des endlosen Übertragungselementes zwischen den beiden Motoren, so dass - wenn jeder der beiden Abschnitte eine ausreichende Länge aufweist, die beiden Motoren also bezogen auf den Verlauf des Übertragungselementes nicht zu nahe beieinander liegen - beide Abschnitte des Übertragungselementes dafür in Frage kommen, jeweils durch einen entsprechenden Antriebssinn der Motoren zum Zwecke der Kontrolle der Funktionsfähigkeit des Übertragungselementes gedehnt zu werden.

In einigen Ausführungsbeispielen kann vorgesehen sein, dass der erste Motor und der zweite Motor über ein jeweiliges Getriebe mit dem Pressmittel verbunden sind, wobei die Getriebeübersetzung für die beiden, vorzugsweise baugleichen und/oder die gleichen Leistungsmerkmale aufweisenden, Motoren derart unterschiedlich gewählt sind, dass der erste Motor das Pressmittel relativ zu dem zweiten Motor schneller verfahren kann und der zweite Motor relativ zu dem ersten Motor eine größere Kraft entfalten kann, insbesondere wobei der zweite Motor zum Komprimieren des Produkts zukuppelbar ist.

Das Pressmittel kann mit dem Übertragungselement über zumindest zwei, insbesondere drei oder vier, Linearantriebe verbunden sein, beispielsweise Spindeltriebe, wobei die Linearantriebe mit dem Pressmittel verbunden sind und das Pressmittel durch die Linearantriebe mittels des Übertragungselementes synchronisiert verfahrbar ist.

Die Erfindung betrifft auch ein Verfahren zum Kontrollieren der Funktionsfähigkeit eines Übertragungselementes in einer Presseinrichtung wie hierin offenbart. Das Verfahren umfasst die Schritte, dass das Übertragungselement mittels des ersten Motors und des zweiten Motors in Richtung einer Dehnung des Übertragungselementes beaufschlagt wird, dass dabei Signale des ersten Motors und/oder des zweiten Motors ausgewertet werden, dass aus den ausgewerteten Signalen ein Messwert für die Dehnung des Übertragungselementes ermittelt wird, dass der ermittelte Messwert mit einem Referenzwert für die Dehnung des Übertragungselementes verglichen wird, und dass bei einer vorgegebenen oder vorgebbaren Abweichung des Messwertes von dem Referenzwert auf ein nicht funktionsfähiges, insbesondere auf ein beschädigtes oder gerissenes, Übertragungselement geschlossen wird.

Wie vorstehend bereits erwähnt, kann das Beaufschlagen des Übertragungselementes in Richtung einer Dehnung des Übertragungselementes auf unterschiedliche Art und Weise erfolgen. Beispielsweise können die beiden Motoren in einander entgegengesetzte Antriebsbewegungen versetzt werden. Alternativ kann der eine Motor in eine Antriebsbewegung versetzt und der andere Motor antriebsunwirksam gehalten werden, so dass er mit dem Übertragungselement in Eingriff steht, dieses aber nicht antriebswirksam bewegt. Insbesondere kann der andere Motor in einer Positionsregelung oder Lageregelung betrieben werden, welche die Position bzw. Lage der Motorwelle unverändert halten soll. Alternativ kann der eine Motor in eine Antriebsbewegung versetzt und der andere Motor dabei über das Übertragungselement lediglich mitgenommen werden, d.h. der andere Motor ist insbesondere lediglich formschlüssig oder reibschlüssig mit dem Übertragungselement verbunden, treibt dieses aber selbst nicht aktiv an. Der insofern passive andere Motor wird somit über das Übertragungselement mitgenommen, wenn der aktive Motor in die Antriebsbewegung versetzt wird. Bei einem funktionsfähigen Übertragungselement wird im Falle einer solchen Mitnahme des anderen Motors bei diesem eine bestimmte Positionsänderung erwartet. Bleibt diese aus, d.h. bewegt sich der mitgenommene Motor weniger als erwartet oder überhaupt nicht mehr, kann somit auf ein nicht funktionsfähiges Übertragungselement geschlossen werden.

Die Kontrolle des Übertragungselementes, also das Beaufschlagen des Übertragungselementes in Richtung einer Dehnung, kann entweder außerhalb eines mittels des Pressmittels durchgeführten Pressvorgangs oder während eines solchen Pressvorgangs durchgeführt werden.

Die beiden Motoren können, insbesondere aufgrund unterschiedlicher Getriebeübersetzungen, einen relativ "starken" Motor einerseits und einen relativ "schnellen" Motor andererseits bilden. Dabei kann vorgesehen sein, dass der starke Motor nur während eines Pressvorgangs zugekuppelt oder eingekuppelt, also antriebswirksam mit dem Pressmittel verbunden, ist und der schnelle Motor während des Pressvorgangs nur mitgenommen wird, wohingegen für ein schnelles Vorpositionieren des Pressmittels oder für ein schnelles Bewegen des Pressmittels zum Öffnen oder Schließen der starke Motor ausgekuppelt wird, damit der schnelle Motor das Pressmittel schnell verfahren kann. Wenn das Übertragungselement während des Pressvorgangs kontrolliert werden soll, kann dies folglich nach dem vorstehend zuletzt erläuterten Konzept erfolgen, d.h. indem der starke Motor das Pressmittel mittels des Übertragungselementes antreibt und der schnelle Motor lediglich mitgenommen wird.

Die im Rahmen der vorliegenden Offenbarung erwähnten Weiterbildungen der anderen Variante ("zwei Motoren"), z.B. hinsichtlich möglicher Ausgestaltungen des Motors, des Übertragungselementes und eines Antriebs für das Pressmittel, werden hiermit auch als Weiterbildungen dieser Variante offenbart, sofern sie sich nicht auf das zwingende Vorhandsein zweier Motoren beziehen.

Die Erfindung wird im Folgenden rein beispielhaft anhand eines Ausführungsbeispiels unter Bezugnahme auf die Zeichnungen erläutert.

Es zeigen:
- Fig. 1A bis 1D: eine jeweilige perspektivische Ansicht einer Presseinrichtung zum Pressen von Fleischprodukten, wobei in den Fig. 1C und 1D einige Komponenten der Presseinrichtung entnommen sind,
- Fig. 2A bis 2C: eine perspektivische Rückansicht und eine perspektivische Vorderansicht auf einen Eingang zu einer Presskammer der Presseinrichtung sowie eine detaillierte Oberansicht zur Veranschaulichung einer Einkapselung von Komponenten einer Eingangskontrolleinrichtung,
- Fig. 3A und 3B: eine jeweilige schematische Darstellung der Presseinrichtung mit geöffnetem Gehäuse,
- Fig. 4A und 4B: eine perspektivische Darstellung eines in einer Pressrichtung verfahrbaren Pressmittels, für welches eine Schutzabdeckung vorgesehen ist, bei geschlossener und bei geöffneter Schutzabdeckung,
- Fig. 5A bis 5C: eine Seitenansicht des Pressmittels sowie zwei Detailansichten der Schutzabdeckung zur Veranschaulichung der Möglichkeit einer werkzeuglosen Entnahme der Schutzabdeckung,
- Fig. 6A und 6B: eine jeweilige perspektivische Ansicht des Pressmittels in einer Startposition, in welcher ein Produkt in die Presskammer der Presseinrichtung einbringbar ist, und einer Endposition, in welcher das in die Presskammer eingebrachte Produkt komprimiert ist,
- Fig. 7A und 7B: eine jeweilige schematische Darstellung eines Antriebs des Pressmittels bei einer Positionierung in der Startposition und einer Positionierung in der Endposition und
- Fig. 8A und 8B: eine Draufsicht auf den Antrieb in der Startposition des Pressmittels und in der Endposition des Pressmittels.

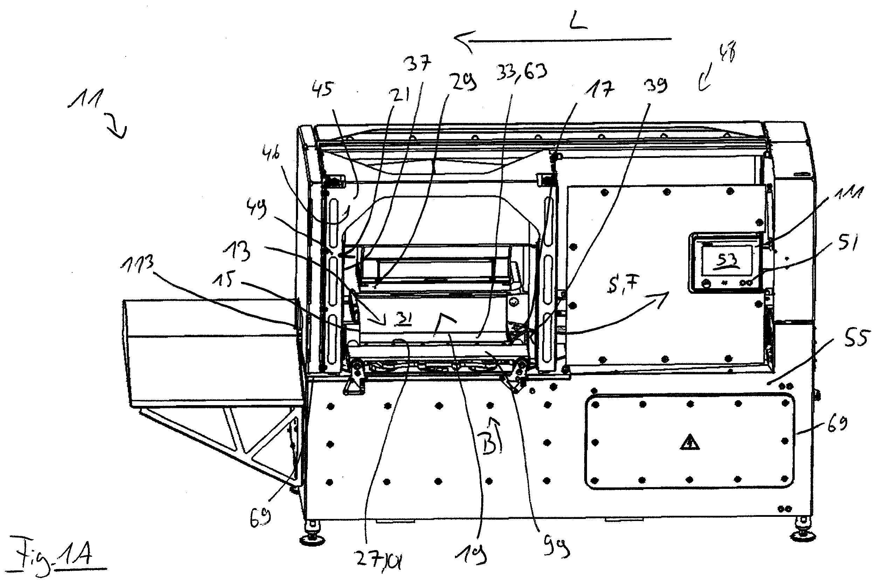

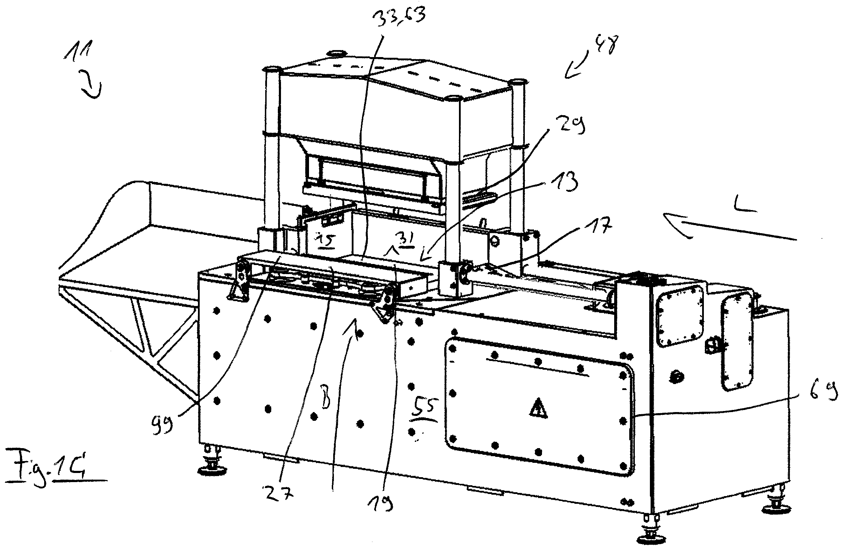

Die Fig. 1A bis 1D zeigen eine Presseinrichtung 11 zum Pressen von Fleischprodukten, wobei die Presseinrichtung 11 insbesondere zum Pressen von gefrorenen und/oder angefrorenen Fleischprodukten, beispielsweise Frischfleischprodukten und/oder Bacon, vorgesehen sein kann. Die Presseinrichtung 11 weist eine sich entlang einer Längsrichtung L erstreckende Presskammer 13 auf, in welche zu pressende Produkte entlang einer Einbringrichtung B durch einen Eingang 19 einbringbar sind. Bei der hier veranschaulichten Presseinrichtung 11 ist eine manuelle Beladung bzw. ein manuelles Einbringen von Produkten in die Presskammer 13 vorgesehen, so dass ein Benutzer durch den Eingang 19 hindurchgreifen und das Produkt auf einer Pressebene 63 in der Presskammer 13 ablegen kann.

Die Presskammer 13 umfasst ein erstes Pressmittel 17, welches dazu ausgebildet ist, entlang der Längsrichtung L auf ein erstes Gegenelement 15 zu verfahren zu werden, um ein in die Presskammer 13 eingebrachtes Produkt dadurch in Längsrichtung zu komprimieren. Ferner umfasst die Presskammer 13 ein zweites Pressmittel 27, welches dazu ausgebildet ist, quer zu der Längsrichtung L und in der Horizontalen auf ein zweites Gegenelement 31 zu verfahren zu werden, um ein Produkt auch in dieser Richtung komprimieren zu können. Darüber umfasst die Presskammer 13 ein drittes Pressmittel 29, welches vertikal nach unten verfahrbar ist, um ein Produkt gegen ein drittes Gegenelement 33, welches die Produktebene 63 bildet, komprimieren zu können. Die Längsrichtung L kann sich insbesondere in der Horizontalen erstrecken und auch die Pressebene 63 kann horizontal ausgerichtet sein. Mittels der Presseinrichtung 11 kann ein Produkt somit in den drei Raumrichtungen komprimiert werden. Dies kann es beispielsweise ermöglichen, einen unregelmäßig geformten Bacon in eine annähernde Quaderform zu bringen, um den Bacon derart verpacken und zum Verkauf anbieten zu können, oder weiterverarbeiten zu können, wobei der Bacon beispielsweise mittels einer nachgelagerten Aufschneidevorrichtung in Scheiben geschnitten werden kann. Ein fertig komprimiertes Produkt kann in Längsrichtung L durch einen Ausgang 113 aus der Presskammer 13, beispielsweise mittels des ersten Pressmittels 17, herausgeschoben werden.

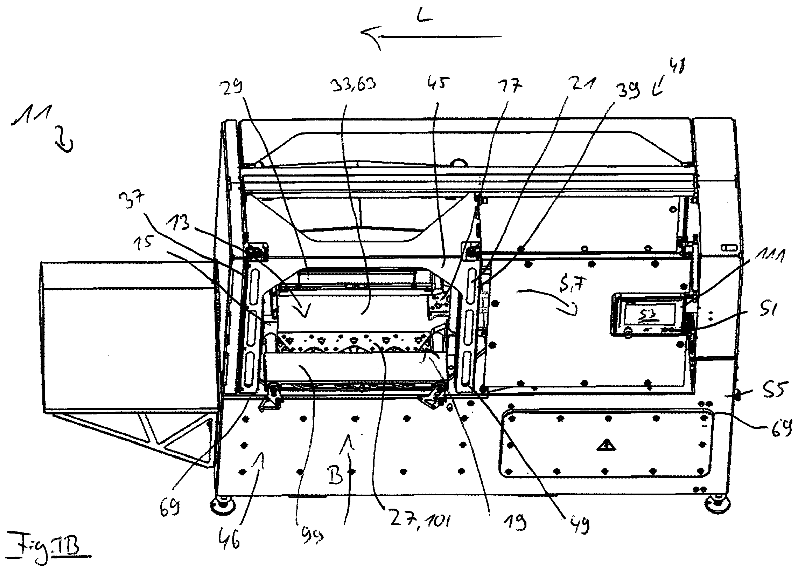

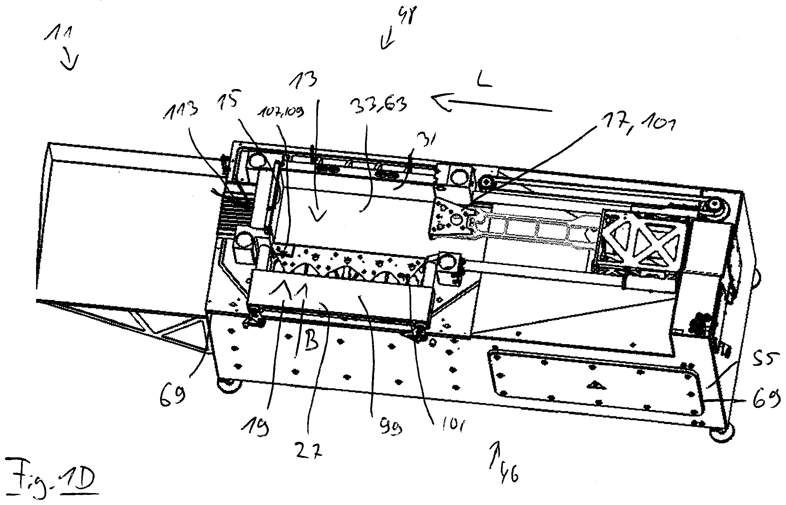

Wie insbesondere aus den Fig. 1B und 1D ersichtlich wird, umfasst das zweite Pressmittel 27, welches quer zu der Längsrichtung L verschiebbar ist, einen bewegbaren Schlitten 99, mit welchem ein Presswerkzeug 101 verbunden ist. An dem Presswerkzeug 101 ist dabei ein RFID-Chip 109 eingebaut, in welchem eine Kennzeichnung 107 gespeichert ist, anhand derer das Presswerkzeug 101 identifizierbar ist. Um eine Identifizierung des Presswerkzeugs 101 zu ermöglichen, umfasst eine Steuereinrichtung 53 der Presseinrichtung 11 eine Ausleseeinrichtung 111, mittels derer die Kennzeichnung 107 auslesbar ist.

Fernere ist bei der Presseinrichtung 11 vorgesehen, dass das Presswerkzeug 101 werkzeuglos aus der Presskammer 13 entnehmbar und/oder werkzeuglos in die Presskammer 13 einsetzbar ist. Insbesondere kann das Presswerkzeug 101 dazu werkzeuglos von dem Schlitten 99 lösbar und/oder werkzeuglos mit dem Schlitten 99 verbindbar sein. Beispielsweise kann es vorgesehen sein, dass das Werkzeug 101 über eine Steckverbindung mit dem Schlitten 99 verbunden werden kann.

Ein solches werkzeugloses Entnehmen des Presswerkzeugs 101 kann es insbesondere ermöglichen, das Presswerkzeug 101 schnell für eine Reinigung oder Wartung aus der Presskammer 13 herauszuholen. Darüber hinaus können jedoch durch eine solche werkzeuglose Entnahme, bei welcher insbesondere der zumeist schwere Schlitten 99 in der Presskammer verbleiben kann, flexibel verschiedene Presswerkzeuge 101 mit dem Schlitten 99 verbunden werden, um beispielsweise durch Einsetzen eines größeren Presswerkzeugs 101 eine größere Komprimierung erreichen zu können. Indem die Ausleseeinrichtung 111 dabei dazu ausgebildet sein kann, einen jeweiligen RFID-Chip 109 des Presswerkzeugs 101 auszulesen, kann der Pressvorgang insbesondere unter Berücksichtigung des jeweiligen eingesetzten Presswerkzeugs 101 durchgeführt werden. So können einem jeweiligen Presswerkzeug 101 beispielsweise verschiedene Verfahrwege und/oder Presskräfte zugeordnet sein und die Steuereinrichtung 53 kann dazu ausgebildet sein, eine entsprechende Prozesssteuerung durchzuführen.

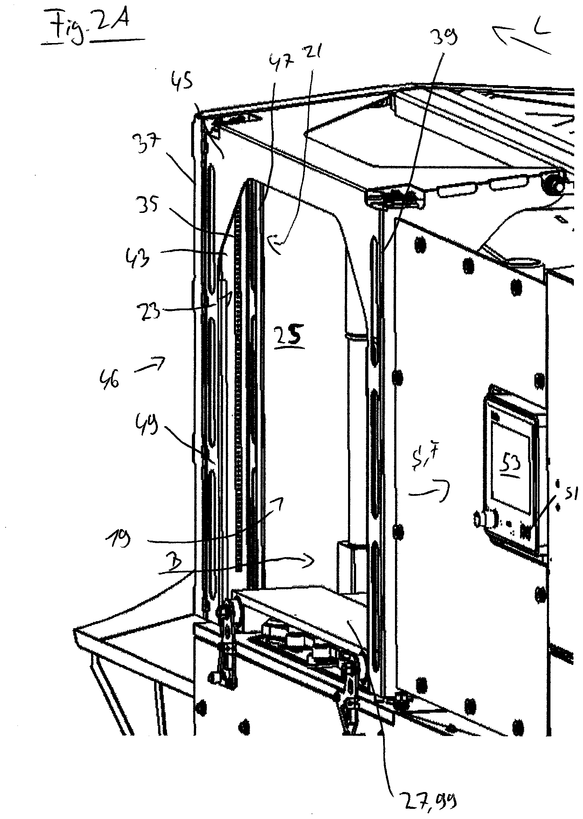

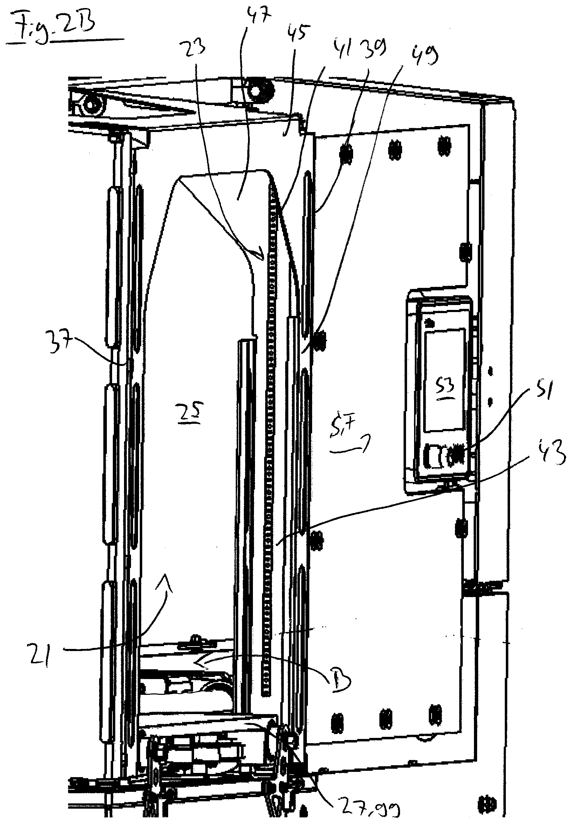

Darüber hinaus wird aus den Fig. 1A bis 1D ersichtlich, dass ein in die Presskammer 13 einzubringendes Produkt über das zweite Pressmittel 27 hinweg entlang der Einbringrichtung B in die Presskammer 13 einzubringen ist. Dies kann, wie bereits erläutert, bei dieser Presseinrichtung 11 insbesondere manuell erfolgen. Daher muss ein Benutzer zum Einbringen eines Produkts in die Presskammer 13 eingreifen. Um etwaige Verletzungen eines Benutzers zuverlässig verhindern zu können, obwohl dieser während des Betriebs in die Presskammer 13 eingreifen können muss, weist die Presseinrichtung 11 eine Eingangskontrolleinrichtung 21 auf, welche dazu ausgebildet ist, ein sich in dem Eingang 19 befindendes Objekt zu erfassen und ein entsprechendes Erfassungssignal S an die Steuereinrichtung 53 zu übermitteln. Wie insbesondere aus den Fig. 2A und 2B hervorgeht, weist die Eingangskontrolleinrichtung 21 dazu insbesondere eine Vielzahl von an einer ersten Seite 37 des Eingangs 19 angeordneten Lichtquellen 35 auf, welche in einer Reihe hintereinander angeordnet und dazu ausgebildet sind, einen jeweiligen Lichtstrahl auszusenden. Auf einer der ersten Seite 37 des Eingangs 19 entgegengesetzten zweiten Seite 39 des Eingangs 19 sind für jede der Lichtquellen zugeordnete Lichtsensoren 41 angeordnet, welche dazu ausgebildet sind, den jeweiligen von der zugeordneten Lichtquelle 35 emittierten Lichtstrahl zu detektieren. Dementsprechend bilden eine jeweilige Lichtquelle 35 und der zugeordnete Lichtsensor 39 eine Lichtschranke 22. Auch die Lichtsensoren 41 sind in einer Reihe hintereinander angeordnet.

Indem die Eingangskontrolleinrichtung 21 eine Vielzahl von Lichtquellen 35 und eine Vielzahl von entsprechender Lichtsensoren 41 aufweist, ist die Eingangskontrolleinrichtung 21 dazu ausgebildet, ein Lichtgitter 25 entlang des Eingangs 19 zu erzeugen. Dieses Lichtgitter 25 umfasst insbesondere die parallel zueinander ausgerichteten Lichtstrahlen, welche die Lichtquellen 35 aussenden. Insbesondere kann die Eingangskontrolleinrichtung 21 dazu ausgebildet sein, das Erfassungssignal S an die Steuereinrichtung 53 zu übermitteln, wenn zumindest eine der Lichtschranken 23 bzw. das Lichtgitter 25 unterbrochen ist.

Indem eine solche Eingangskontrolleinrichtung 21 vorgesehen ist, kann insbesondere ein unbedarfter Eingriff eines Benutzers durch den Eingang 19 detektiert und ein gegebenenfalls bereits gestarteter Pressvorgang beeinflusst werden, um eine Verletzung des Benutzers zu verhindern. Dies ermöglicht eine hohe Sicherheit der Presseinrichtung 11, wohingegen es jedoch nicht erforderlich ist, den Eingang 19 vor einem Pressvorgang durch eine massive Abdeckung zu verschließen. Dies ist bei herkömmlichen Presseinrichtungen zumeist erforderlich, was jedoch aufgrund des Gewichts einer solchen Abdeckung in der Regel schwer durchzuführen ist und insbesondere auch den Prozess des Pressens verlangsamen kann, da ein solches Schließen der Presskammer 13 vor jedem Pressvorgang erforderlich ist und der Eingang 19 erst wieder geöffnet werden muss, um ein neues Produkt in die Presskammer 13 einbringen zu können. Bei der anhand der Figuren veranschaulichten Presseinrichtung 11 kann der Eingang 19 hingegen während des gesamten Pressvorgangs offenbleiben, wobei jedoch aufgrund der Eingangskontrolleinrichtung 21 dennoch eine hohe Prozesssicherheit erreicht werden kann.

Darüber hinaus kann die Prozesssteuerung noch weiter verbessert werden, indem von der Eingangskontrolleinrichtung 21 ausgesandte Signale, insbesondere das Erfassungssignal S, unmittelbar in die Prozesssteuerung einbezogen werden. Die Eingangskontrolleinrichtung 21 kann zudem dazu ausgebildet sein, ein Freigabesignal F auszusenden, wenn sich kein Objekt in dem Eingang 19 befindet. Dazu kann die Eingangskontrolleinrichtung 21 beispielsweise ein gesondertes Signal aussenden, um ein Freigabesignal F an die Steuervorrichtung 53 zu übermitteln, oder das Ausbleiben eines Erfassungssignals S kann als Freigabesignal F gewertet werden. Die Steuereinrichtung 53 kann beispielsweise dazu ausgebildet sein, den Pressvorgang automatisch zu starten, wenn eine vorgegebene oder vorgebbare zeitliche Korrelation zwischen einem Erfassungssignal S und einem darauffolgenden Freigabesignal F vorliegt. Wenn ein Benutzer ein zu pressendes Produkt in die Presskammer 13 einbringt, greift der Benutzer durch den Eingang 19 hindurch und aufgrund des sich in dem Eingang 19 befindenden Arms des Benutzers erzeugt die Eingangskontrolleinrichtung 21 ein Erfassungssignal S. Sobald der Benutzer den Arm jedoch wieder aus dem Eingang 19 entfernt, kann die Eingangskontrolleinrichtung 21 ein Freigabesignal F aussenden. Sofern zwischen dem zunächst ausgesendeten Erfassungssignal S und dem darauffolgenden Freigabesignal F eine zeitliche Korrelation besteht, welche etwa die Dauer eines typischen Einbringvorgangs widerspiegeln kann, kann die Steuereinrichtung 53 den Pressvorgang automatisch starten. Weitere Aktionen des Benutzers zum Starten des Pressvorgangs sind daher nicht erforderlich, so dass dieser insgesamt beschleunigt durchgeführt werden kann. Durch die zeitliche Korrelation kann auch sichergestellt werden, dass beispielsweise nicht unmittelbar bei einem Freigabesignal F, welches auf ein Erfassungssignal S folgt, ein Pressvorgang gestartet wird, so dass beispielsweise kein Pressvorgang nach länger andauernden Wartungsarbeiten, während derer sich dauerhaft ein Objekt in dem Eingang 19 befindet, gestartet wird. Es kann jedoch auch vorgesehen sein, mittels der Steuereinrichtung 53 während Wartungsarbeiten einen automatischen Start eines Pressvorgangs zu unterdrücken.

Wie im Einleitungsteil erwähnt, ist die Presseinrichtung 11 mit einer Zustandsanzeigeeinrichtung 51 versehen, die z.B. durch Aufleuchten einer grünen Leuchte einen Bereitschaftszustand der Presseinrichtung 11 zum Durchführen eines Pressvorgangs anzeigt, wenn die Eingangskontrolleinrichtung 21 kein Erfassungssignal S aussendet, und die ein Warnsignal z.B. durch Aufleuchten einer roten Leuchte anzeigt, wenn ein Erfassungssignal S vorliegt.

Wie ferner aus den Fig. 2A bis 2C hervorgeht, sind die Lichtquellen 35 und die Lichtsensoren 41 in einem jeweiligen Rohr 43 angeordnet, wie es insbesondere aus Kunststoff und/oder aus Plexiglas gefertigt sein kann. Die Rohre 43 können zudem abgedichtet sein, um die Lichtquellen 35 bzw. die Lichtsensoren 41 insbesondere vor dem Eintreten von zu Reinigungszwecken verwendeter Flüssigkeit und einer dadurch bedingten Beschädigung zu schützen.

Darüber hinaus weist die Presseinrichtung 11 einen Vorderrahmen 45 auf, durch welchen die Lichtquellen 35 und die Lichtsensoren 41 an einer der Presskammer 13 abgewandten Vorderseite 46 abgeschirmt sind. Der Vorderrahmen 45 kann beispielsweise aus Blech ausgebildet sein und dazu dienen, die Lichtquellen 35 bzw. die Lichtsensoren 41 zusätzlich vor einer Beschädigung zu schützen, wenn die Presskammer 13 beispielsweise mittels eines Hochdruckreinigers gereinigt wird. Gleichsam kann dadurch eine solche Reinigung der Presskammer 13 ermöglicht werden, ohne dass eine Beschädigung der Eingangskontrolleinrichtung 21 droht.

Darüber hinaus weist die Presseinrichtung 11 auf einer der Presskammer 13 zugewandten Rückseite 48 einen Hinterrahmen 47 auf, welcher gleichsam aus Blech ausgebildet sein kann. Insbesondere kann dieser Hinterrahmen 47 die Lichtquellen 35 bzw. die Lichtsensoren 41 vor einer Beschädigung schützen, wenn beispielsweise das Presswerkzeug 101 des zweiten Pressmittels 27 aus der Presskammer 13 entnommen wird. Ein Anschlagen des Pressmittels 101 an den Rohren 43 kann vermieden werden. In gleicher Weise kann der Vorderrahmen 45 auch dazu dienen, ein Anschlagen des Presswerkzeugs 101 an den Rohren 43 und/oder den Lichtquellen 35 und/oder den Lichtsensoren 41 während eines Einsetzens des Presswerkzeugs 101 zu verhindern.

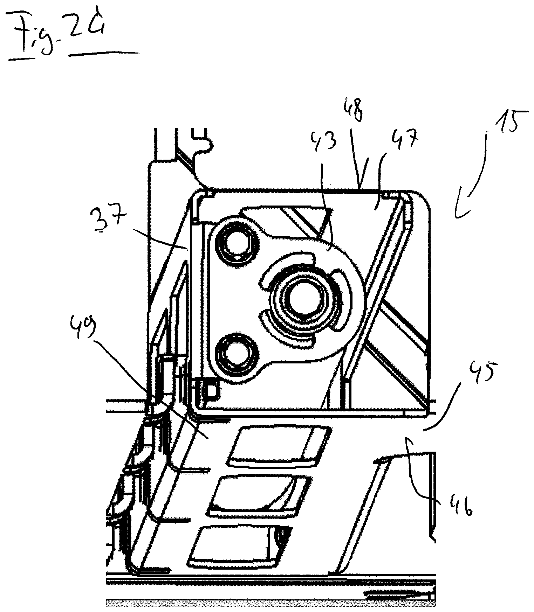

Wie insbesondere aus Fig. 2C hervorgeht, sind die Lichtquellen 35 auch an der ersten Seite 39 des Eingangs 19 abgeschirmt, so dass die Lichtgitter 35 insgesamt dreiseitig durch eine Einkapselung 49 vor Beschädigungen geschützt sind. Die Einkapselung 49 ist dabei U-förmig ausgebildet, so dass die von den Lichtquellen 35 emittierten Lichtstrahlen in Richtung der zweiten Seite 39 austreten können, die Lichtquellen 35 an den anderen Seiten jedoch zuverlässig geschützt sind. In gleicher Weise sind auch die Lichtsensoren 41 bzw. das Rohr 43, in welchem die Lichtsensoren 41 angeordnet sind, dreiseitig eingekapselt.

Die Fig. 3A und 3B zeigen wiederum eine jeweilige perspektivische Darstellung der Presseinrichtung 11, wobei jedoch an der Vorderseite 46 eine Gehäuseabdeckung eines geschlossenen Gehäuses 55 entnommen ist, so dass die darin angeordneten Komponenten sichtbar sind.

Indem die Produkte, wie vorstehend erläutert, bei der gezeigten Presseinrichtung manuell über das zweite Pressmittel 27 hinweg in die Presskammer 13 eingebracht werden, muss in vertikaler Richtung ein ausreichender Freiraum für dieses Einbringen bestehen. Dementsprechend muss dieser Freiraum von dem in vertikaler Richtung verfahrbaren dritten Pressmittel 29 gewährt werden, so dass das dritte Pressmittel 29 einen verhältnismäßig großen Weg zurücklegen muss, um ein in der Presskammer 13 angeordnetes Produkt pressen zu können. Um dennoch einen Pressvorgang möglichst schnell durchführen und diesen Weg schnell überbrücken zu können, weist die Presseinrichtung 11 einen ersten Motor 57 und einen zweiten Motor 59 auf, mittels derer das dritte Pressmittel 29 verfahrbar ist. Die Motoren 57 und 59 sind unterhalb der Pressebene 63 in dem geschlossenen Gehäuse 55 angeordnet.

Ferner treiben die Motoren 57 und 59 einen Riemen 117 an, um das dritte Pressmittel 29 an vier Stellen in Richtung der Pressebene 63 herabziehen zu können. Die Motoren 57 und 59 sind dabei über ein jeweiliges Getriebe 61 mit dem Riemen 117 verbunden. Der erste Motor 57 ist dazu ausgebildet, relativ zu dem zweiten Motor 59 das dritte Pressmittel 29 schneller zu verfahren, wohingegen der zweite Motor 59 dazu ausgebildet ist, eine gegenüber dem ersten Motor 57 größere Kraft zu entfalten. Dementsprechend kann eine Drehzahl des zweiten Motors 59 mittels des zugeordneten Getriebes 61 stärker untersetzt auf den Riemen 117 übertragen werden, als eine Drehzahl des ersten Motors 57 mittels des zugeordneten Getriebes 61.

Um einen schnellen Pressvorgang zu ermöglichen, kann die Steuereinrichtung 53 dazu ausgebildet sein, das dritte Pressmittel 29 zunächst mittels des schnelleren ersten Motors 57 vorzupositionieren und beispielsweise in Anlage zu dem sich in der Presskammer 13 befindenden Produkt zu bringen. Daraufhin kann die Steuereinrichtung 53 dazu ausgebildet sein, das Produkt mittels des eine größere Kraft entfaltenden zweiten Motors 59 zu komprimieren. Dazu kann der zweite Motor 59 beispielsweise einkuppelbar sein, so dass auch der erste Motor 57 während des Pressvorgangs weiterdrehen kann. Das Zurückfahren des dritten Pressmittels 29 nach einem Pressvorgang kann wiederum beispielsweise durch den ersten Motor 57 erfolgen. Durch ein solches Antreiben des dritten Pressmittels 29 mittels zweier Motoren 57 und 59 kann somit einerseits der zum Einbringen des Produkts in die Presskammer 13 erforderliche Freiraum schnell überbrückt und andererseits dennoch die erforderliche Presskraft entfaltet werden.

Bei den beiden Motoren 57, 59 handelt es sich vorzugsweise um Servomotoren. Diese können mittels der Steuereinrichtung 53 gezielt angesteuert werden. Ferner ermöglicht es die Steuereinrichtung 53, Signale von den Servomotoren 57, 59 bzw. deren Gebern auszuwerten. Die beiden Motoren 57, 59 können also gemäß dem am Ende des Einleitungsteils erläuterten Konzept dazu verwendet werden, die Funktionsfähigkeit des Riemens 117 zu kontrollieren. Bei dem Riemen 117 handelt es sich beispielsweise um einen Zahnriemen. Wie vorstehend erläutert, kann diese Funktionsprüfung des Riemens 117 während eines Pressvorgangs oder außerhalb eines Pressvorgangs erfolgen. Ferner kann diese Funktionsprüfung entweder einmalig bei Betriebsbeginn oder regelmäßig während des laufenden Betriebs der Presseinrichtung erfolgen. Diese Kontrolle des Riemens 117 kann automatisiert erfolgen und in die Steuerungssoftware der Steuereinrichtung 53 integriert werden. Eine solche automatisierte Riemenkontrolle macht folglich aufwendige Sichtprüfungen des Riemens 117 überflüssig und erfordert zudem keine zusätzlichen Messgeräte. Die ohnehin vorhandenen Motoren 57, 59 samt vorhandener Regelelektronik genügen, um eine sichere und zuverlässige Überprüfung des Riemens 117 zu erzielen. Damit wird das Risiko minimiert, dass der Riemen 117 dann versagt, wenn er für die Herstellung eines sicheren Zustands erforderlich ist, wie es vorstehend ebenfalls erläutert worden ist.

Wenn während eines Pressvorgangs oder eines Presszyklus ein Benutzer in das Lichtgitter 25 eingreift, ist es erforderlich, das dritte Pressmittel 29 innerhalb einer vorgegebenen Zeit zu stoppen. Dies wird dadurch erreicht, dass der jeweils aktive Motor, beispielsweise der eingekuppelte zweite Motor 59, die Bewegung des Pressmittels 29 bis zum Stillstand abbremst. Es kann durch ein redundantes System eine zusätzliche Bremse vorgesehen sein, die jeweils zwischen Motor 57, 59 und zugehörigem Getriebe 61 eingebaut ist. Unabhängig davon, ob eine solche zusätzliche Bremse vorhanden ist oder nicht, setzt dieses Sicherheitskonzept in jedem Fall voraus, dass der Riemen 117 als Übertragungselement zu jedem Zeitpunkt funktionsfähig ist, da über diesen Riemen 117 das Bremsmoment des betreffenden Motors bzw. der erwähnten Bremse zu den Spindeln 118 (vgl. Fig. 3A, 3B) gelangt, über welche der Riemen 117 das mit den Spindeln 118 verbundene dritte Pressmittel 29 in vertikaler Richtung verfährt.

Wie an anderer Stelle bereits erläutert, besteht theoretisch die Möglichkeit, dass zufällig im Moment eines unerlaubten Eingreifens in das Lichtgitter 25 der Riemen 117 reißt. Dann kann das dritte Pressmittel 29 also nicht mehr innerhalb der erforderlichen Zeit zum Stilstand gebracht werden. Um diese Sicherheitslücke zu schlie-ßen, müssten beispielsweise aufwendige und teure Bremsen an den Spindeln 118 angebracht werden.

Das hier vorgestellte Konzept einer Kontrolle der Funktionsfähigkeit des Riemens 117 vermeidet diesen Aufwand, indem es die Wahrscheinlichkeit minimiert, dass der Riemen 117 unerwartet und insbesondere gerade dann versagt, wenn in das Lichtgitter 25 eingegriffen wird, da die Funktionsfähigkeit des Riemens 117 regelmäßig geprüft wird. Das verbleibende Restrisiko ist minimal, da eine Beschädigung des Riemens 117 frühzeitig erkannt und der Riemen 117 dann ausgewechselt werden kann, um ein Versagen zu vermeiden.

Wie bereits an anderer Stelle erläutert, kann die Funktionsüberprüfung beispielsweise dadurch erfolgen, dass außerhalb eines Pressvorgangs, also bei ausgekuppeltem ersten Motor 57, der eine Motor in Lageregelung betrieben und der andere Motor mit einem definierten Antriebsmoment gedreht wird. Dies kann z.B. nacheinander in den beiden Drehrichtungen erfolgen, wobei über die Geber der beiden Servomotoren 57, 59 der Winkel zwischen den beiden Endlagen erfasst werden kann. Alternativ kann die Drehung nur in eine Richtung erfolgen, wobei dann der Winkel zwischen Anfangslage und Endlage erfasst wird.

Beispielsweise bei Inbetriebnahme der Presseinrichtung oder bei Einbau eines neuen Riemens 117 kann auf diese Weise ein Referenzwert erhalten werden, der in der Steuereinrichtung 53 hinterlegt werden und dann während des Betriebs der Presseinrichtung mit den Messwerten der einzelnen Kontrollvorgänge verglichen werden kann.

Auf diese Weise kann ein defekter Riemen 117 frühzeitig erkannt werden, da ein solcher sich bei gleicher Krafteinwirkung weiter dehnt als ein intakter Riemen. Das Maß der Dehnung ist umgekehrt proportional zur Anzahl der im Riemen 117 enthaltenen Zugträger, d.h. eine typische Beschädigung des Riemens 117 würde mit einer Verringerung der Anzahl der Zugträger einhergehen, womit sich bei gleicher Krafteinwirkung ein grö-ßerer Drehwinkel der Servomotoren 57, 59 ergibt als bei intaktem Riemen 110.

Darüber hinaus ist auch ein Antrieb 71 mit einem Elektromotor 75, mittels dessen das zweite Pressmittel 27 antreibbar ist, in dem geschlossenen Gehäuse 55 und unter der Pressebene 63 angeordnet. Auch ein Motor 115, mittels dessen das erste, in Längsrichtung 11 verfahrbare Pressmittel 17 verfahrbar ist, ist unter der Pressebene 63 und in dem geschlossenen Gehäuse 55 angeordnet. Insbesondere sind somit sämtliche Motoren 57, 59, 75 und 115 zum Antreiben der Pressmittel 17, 27 und 29 unterhalb der Pressebene 63 angeordnet, so dass eine Kontamination des sich in der Presskammer befindenden Produkts, beispielsweise durch austretendes Schmiermittel, verhindert werden kann.

Darüber hinaus ist, wie bereits erwähnt, das Gehäuse 55, in welchem die Motoren 57, 59, 75 und 115 angeordnet sind, geschlossen. Insbesondere kann das Gehäuse 55 durch eine Abdichtung 69 gegen die Pressebene 63 abgedichtet sein, um eine Kontamination der Motoren 57, 59 und 75 durch beispielsweise während des Pressens austretende Flüssigkeit zu verhindern. Auch ein Eintritt von kontaminierter Luft aus einer Halle und/oder von Feuchtigkeit in das Gehäuse 55, durch welches die Motoren 57, 59, 75 oder 115 bzw. die sonstigen Antriebskomponenten beschädigt werden könnten, kann ebenfalls verhindert werden.

Darüber hinaus ist in dem geschlossenen Gehäuse 55 eine Luftstromeinrichtung 65 angeordnet, welche zwei Gebläse 67 umfasst. Die Gebläse 67 sind dazu ausgebildet, einen Luftstrom, insbesondere einen innerhalb des Gehäuses 55 an den Innenseiten der Außenwände des Gehäuses 55 entlangströmenden Ringstrom, zu erzeugen, um von den Motoren 57, 59, 75 und 115 generierte Wärme in dem Gehäuse 55 verteilen und gleichmäßig über dessen Außenwände durch Konvektion abgeben zu können. Die gesamte oder zumindest ein wesentlicher Anteil der Fläche des Gehäuses 55 steht so für die Abgabe von Wärme zur Verfügung. Dies ermöglicht eine Kühlung der Motoren 57, 59, 75 und 115, ohne dass dazu ein Luftaustausch zwischen der Luft in dem Gehäuse 55 und sich außerhalb des Gehäuses 55 befindender Luft erforderlich ist. Auch etwaige Abdeckungen des Gehäuses 55, durch welche ein Zugriff beispielsweise für Wartungsarbeiten ermöglicht werden kann, sind durch jeweilige Abdichtungen 69 abgedichtet (vgl. beispielsweise Fig. 3B).

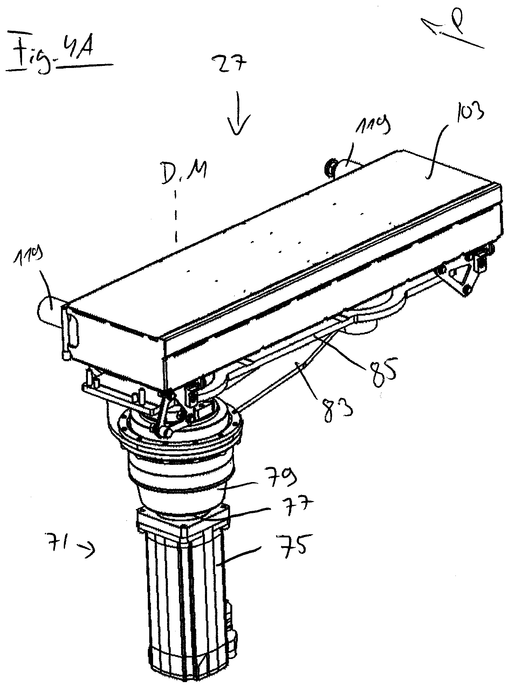

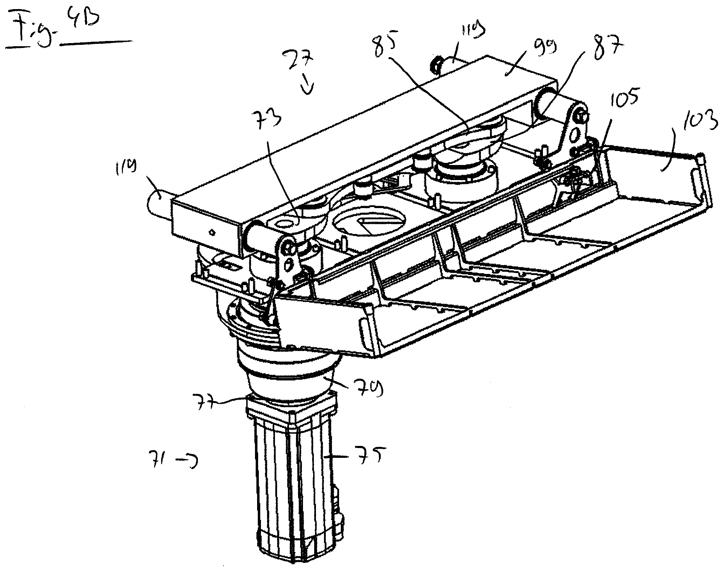

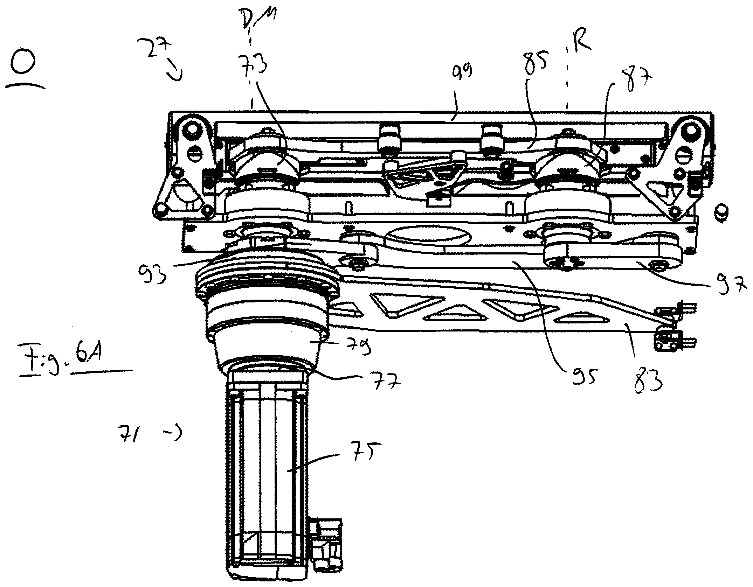

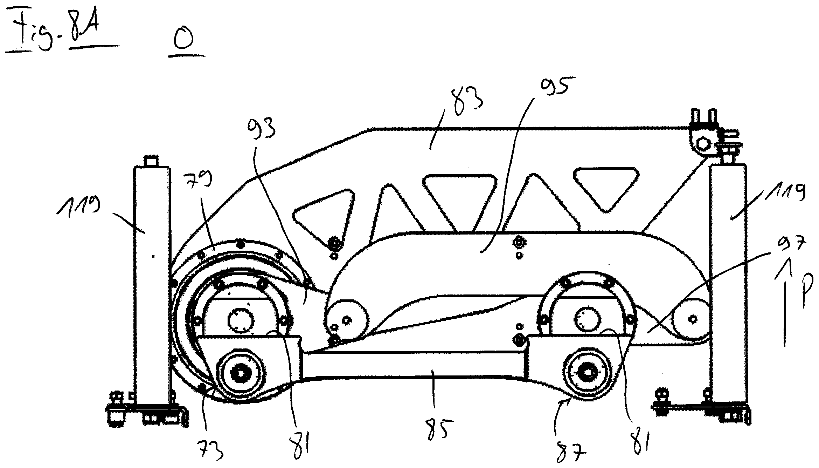

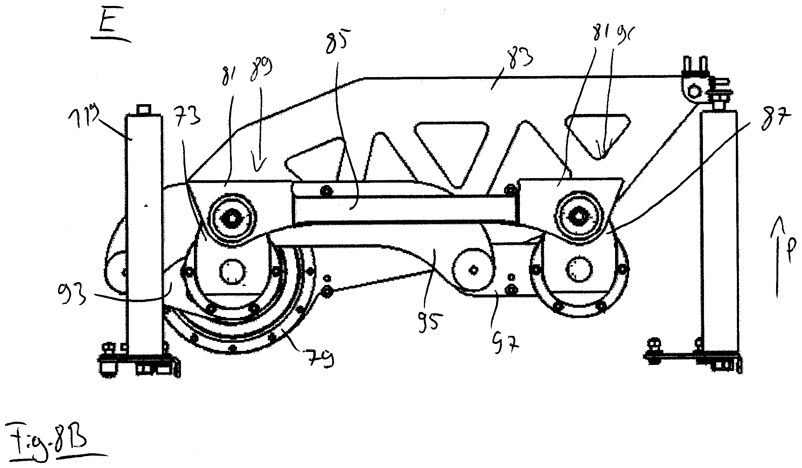

Die Fig. 4A und 4B veranschaulichen ferner das zweite Pressmittel 27 und dessen Antrieb 71, auf welchen nachstehend auch im Zusammenhang mit den Fig. 6A bis 8B noch genauer eingegangen wird. Das Pressmittel 27 umfasst den Schlitten 99, an welchem das Presswerkzeug 101 befestigt werden kann. Der Schlitten 99 ist ferner von einer Schutzabdeckung 103 abgedeckt, wobei diese Schutzabdeckung 103 jedoch, wie Fig. 4B zeigt, relativ zu dem Pressmittel 27 bewegt und insbesondere verschwenkt werden kann. Hierdurch kann, wie Fig. 4B zeigt, ein Zugriff für beispielsweise Reinigungs- oder Wartungsarbeiten zu den unterhalb des Schlittens 99 angeordneten Komponenten des Antriebs 71 des Pressmittels 27 freigegeben werden. Insbesondere sind diese Komponenten dabei zugänglich, ohne dass der Schlitten 99 aus der Presskammer 13 entfernt werden muss. Dies kann Wartungs- und/oder Reinigungsarbeiten deutlich erleichtern. Insbesondere zeigt Fig. 4B, dass der Schlitten 99 einen Exzenter 73 und einen weiteren Exzenter 87 sowie eine Koppelstange 85, deren Funktionen nachstehend näher erläutert sind, gehäuseartig umgibt.

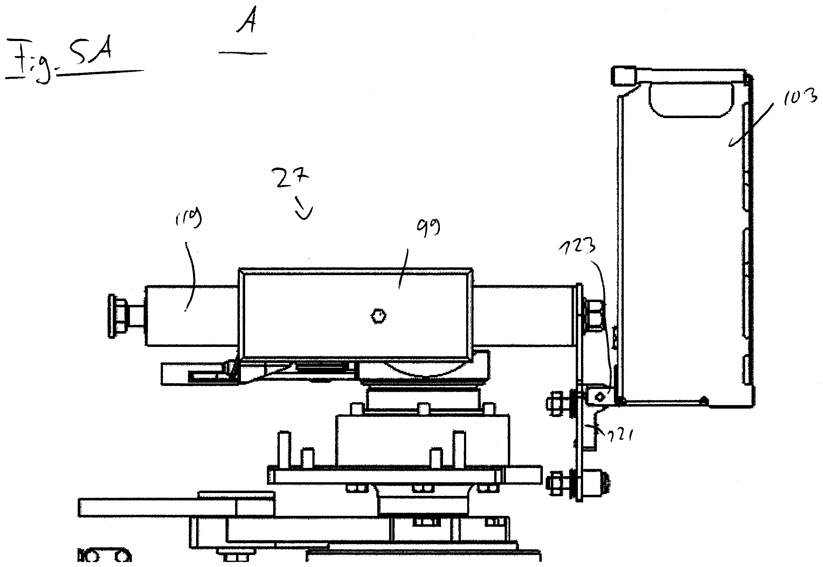

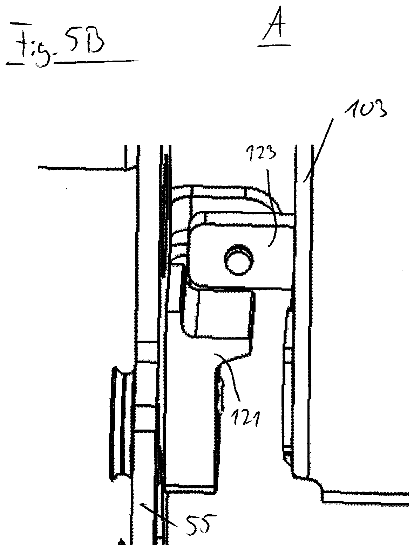

Während die Schutzabdeckung 103 somit relativ zu dem Schlitten 99 verschwenkbar ist, um einen Zugang auf die darunter angeordneten Komponenten des Antriebs 71 des Pressmittels 27 zu ermöglichen, kann die Schutzabdeckung 103 darüber hinaus auch werkzeuglos von dem Gehäuse 55 der Presseinrichtung 11 entnommen werden, wie anhand der Fig. 5A bis 5C veranschaulicht ist. Während eines Pressvorgangs, während dessen das Pressmittel 27 entlang einer Pressrichtung P verfahren werden kann, kann der Schlitten 99 jedoch aus der Schutzabdeckung 103 herausgefahren werden, wobei die Schutzabdeckung 103 an dem Gehäuse 55 befestigt und daher unbewegt bleibt.

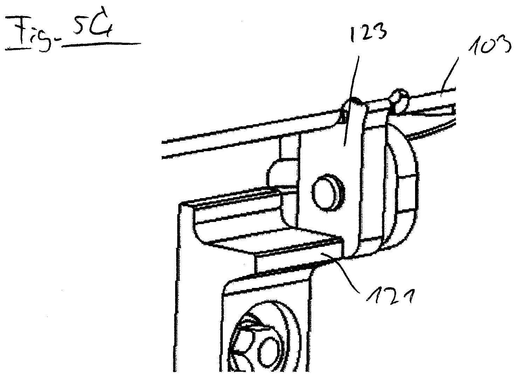

Fig. 5A zeigt die Schutzabdeckung 103 in einer Entnahmestellung A, in welcher die Schutzabdeckung 103 um 90° relativ zu dem Schlitten 99 verschwenkt ist. In dieser Stellung ist eine an der Schutzabdeckung 103 ausgebildete Lasche 123 gerade so relativ zu einem an dem Gehäuse 55 fixierten Sicherungselement 121 ausgerichtet, dass die Schutzabdeckung 103 über das Sicherungselement 121 geschoben und dadurch von dem Gehäuse 55 gelöst werden kann. Während eines Pressvorgangs, während dessen die Schutzabdeckung 103 den Schlitten 99 bedeckt, hintergreift die Lasche 123 hingegen das Sicherungselement 121, so dass die Schutzabdeckung 130 an dem Gehäuse gehalten ist (vgl. Fig. 5C). Darüber hinaus zeigt Fig. 4B, dass die Schutzabdeckung 103 eine Sicherungsschaltung 105 aufweist, welche dazu ausgebildet ist, zu erfassen, wenn die Schutzabdeckung 103 den Schlitten 99 bedeckt. Dadurch kann sichergestellt werden, dass die Schutzabdeckung 103 während eines Pressvorgangs sicher über dem Schlitten 99 angeordnet ist, um insbesondere eine der Schutzabdeckung 103 zugewandte Quetschstelle, auf welche der Schlitten 99 bei einem Herausfahren aus der Presskammer 13 zugefahren wird, zu sichern. Die Sicherungsschaltung 105 kann insbesondere mit der Steuereinrichtung 53 der Presseinrichtung 11 verbunden sein, wobei die Steuereinrichtung 53 dazu ausgebildet sein kann, einen Pressvorgang lediglich dann zu starten, wenn die Sicherungsschaltung 105 anzeigt, dass die Schutzabdeckung 103 korrekt positioniert ist.

Um ein Produkt in der Presskammer 13 mittels des Pressmittels 27 komprimieren zu können, ist das Pressmittel 27 entlang einer Pressrichtung P zwischen einer Startposition O, in welche das Pressmittel 27 am weitesten von dem Gegenelement 31 entfernt ist, und einer Endposition E, in welcher das Pressmittel 27 am weitesten auf das Gegenelement 31 zu verfahren ist, mittels des Antriebs 71 bewegbar (vgl. Fig. 4A, 4B sowie 6A bis 8B). Dabei ist das Pressmittel 27 bzw. der Schlitten 99 über zwei seitliche Führungen, welche als Führungsstangen 119 ausgebildet sind, entlang der Pressrichtung P geführt, um eine möglichst lineare Bewegung des Pressmittels 27 ohne die Gefahr eines Verkantens zu erreichen.

Insbesondere kann die Presseinrichtung 11 als Bestandteil einer Verarbeitungslinie für Fleischprodukte vorgesehen sein, wobei die von der Presseinrichtung 11 komprimierten Fleischprodukte beispielsweise, wie vorstehend bereits erwähnt, von einer nachgelagerten Aufschneidevorrichtung in Scheiben geschnitten werden können. Eine solche Verarbeitungslinie kann sich insbesondere entlang der Längsrichtung L der Presskammer 13 erstrecken, wobei jedoch der für die Presseinrichtung 11 zur Verfügung stehende Raum insbesondere bei einer Integration in eine solche zumeist ohnehin lange Verarbeitungslinie beschränkt sein kann. Dies kann auch und insbesondere für eine Richtung quer zu der Längsrichtung L gelten, welche mit der Pressrichtung P des Pressmittels 27 übereinstimmt und entlang welcher die Produkte auch in Einbringrichtung B in die Presskammer 13 eingebracht werden können. Insbesondere das Einbringen der Produkte entlang der Einbringrichtung B erfordert eine schmale Bauweise der Presseinrichtung 11, um einen möglichst leichten Zugang in die Presskammer 13 zu ermöglichen. Gleichsam ist jedoch ein Antrieb für das Pressmittel 27 erforderlich, um dieses in Pressrichtung P verschieben zu können, wobei eine schmale Bauweise dieses Antriebs anzustreben ist.

Dies ist bei der anhand der Figuren veranschaulichten Presseinrichtung 11 dadurch realisiert, dass der Antrieb 71 dazu ausgebildet ist, zum Verfahren des Pressmittels 27 von der Startposition O in die Endposition E einen um eine Drehachse D drehbaren Exzenter 73 anzutreiben, wobei das Pressmittel 27 durch eine Drehung des Exzenters 73 um mehr als 90°, hier 180°, von der Startposition O in die Endposition E verfahrbar ist. Die Drehachse D des Exzenters 73 ist dabei koaxial zu einer Motordrehachse M, um welche eine Motorwelle 77 des Elektromotors 75 drehbar ist, angeordnet bzw. entspricht der Motordrehachse M.

Indem der Exzenter 73 zum Verfahren des Pressmittels 27 von der Startposition O in die Endposition E um 180° drehbar ist, kann mittels des Exzenters 73 bei lediglich geringer Exzentrizität ein verhältnismäßig großer Verfahrweg realisiert werden, indem der Verfahrweg der doppelten Exzentrizität entsprechen kann. Aufgrund der lediglich geringen Exzentrizität des Exzenters 73 muss zudem der Motor 75 gleichsam lediglich verhältnismäßig geringe Drehmomente aufbringen, um die erforderliche Kraft zum Komprimieren eines Produkts in der Presskammer 13, beispielsweise etwa 1 kN, aufbringen zu können.

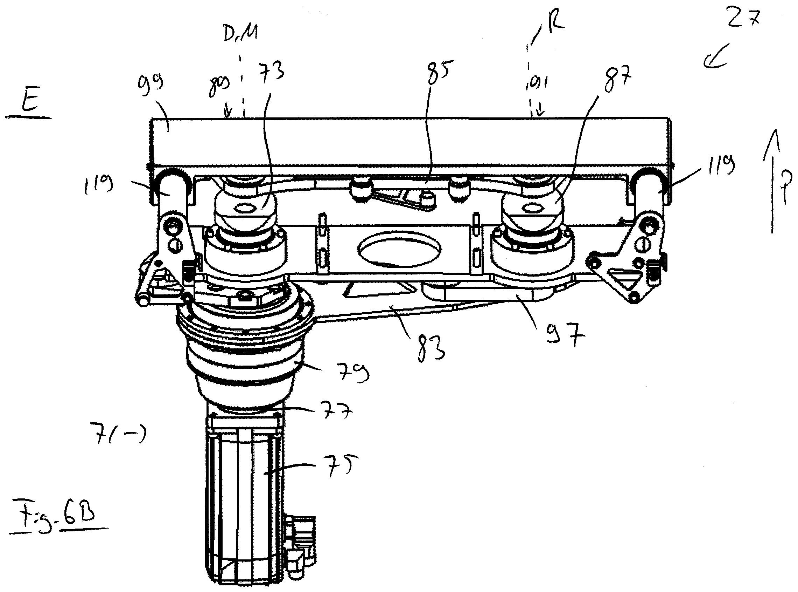

Insbesondere kann es vorgesehen sein, das Pressmittel 27 während eines Pressvorgangs zuerst zu verfahren, wobei der Exzenter 73, wie insbesondere Fig. 6B zeigt, in der Endposition E in Pressrichtung P und in Richtung der Presskammer 73 ausgerichtet sein kann, so dass während des Verfahrens der weiteren Pressmittel 17 und 33 (zum Komprimieren des Produktes in Längsrichtung und in Vertikalrichtung) durch das Produkt auf das Pressmittel 27 übertragene Kräfte kein Drehmoment auf den Motor 75 übertragen, so dass der Antrieb 71 diesen Kräften widerstehen kann. Darüber hinaus kann aufgrund der lediglich verhältnismäßig geringen zu erzeugenden Drehmomente auch ein Getriebe 79, über welches der Exzenter 73 mit dem Elektromotor 75 verbunden ist und welches beispielsweise als Planetengetriebe ausgebildet sein kann, verhältnismäßig einfach und dadurch günstig ausgebildet sein. Insbesondere kann das Getriebe 79 eine Übertragung einer Drehzahl der Motorwelle 77 auf den Exzenter 73 mit verlangsamter Drehzahl ermöglichen, um die erforderlichen Drehmomente mittels eines schnell drehenden Elektromotors 75 generieren zu können.

Indem die Drehung des Elektromotors 75 unmittelbar in dem Sinne auf den Exzenter 73 übertragen wird, dass keine Übersetzung der Drehbewegung des Motors 75 in eine translatorische Bewegung erfolgt, kann insbesondere auch ein hoher Wirkungsgrad des Antriebs 71 erreicht werden. Darüber hinaus ermöglicht diese direkte Übertragung der Drehbewegung, anders als bei einem Antrieb eines Exzenters beispielsweise mittels einer Pleuelstange eines Hydraulikantriebs, die genannte Drehung des Exzenters 73 um 180°. Dies wird dadurch erreicht, dass mittels des Elektromotors 75 stets dasselbe Drehmoment auf den Exzenter 73 übertragen werden kann, wohingegen bei einer Übertragung beispielsweise mittels einer translatorisch bewegten Pleuelstange lediglich in einem geringen Winkelbereich ein ausreichendes Drehmoment übertragen werden kann.

Ferner sind die Drehachse D sowie die Motordrehachse M bei der gezeigten Ausführungsform vertikal ausgerichtet, so dass sich der Antrieb 71 von dem Schlitten 99 vertikal nach unten erstreckt. Insbesondere ist der Antrieb 71 an dem Schlitten 99 vertikal gehalten. Ferner ist der Antrieb 71 bzw. das Getriebe 79 über eine Drehmomentstütze 83 an dem Gehäuse 55 der Presseinrichtung 11 abgestützt, um während des Pressens auf das Pressmittel 27 übertragene Drehmomente auf das Gehäuse 55 übertragen zu können. Indem der Antrieb 71 jedoch anderweitig nicht an dem Gehäuse 55 fixiert ist und insbesondere an dem Pressmittel 27 hängt, kann beispielsweise ein Toleranzausgleich zwischen Lagern des Getriebes 79 und Lagern des Exzenters 73 erreicht werden. Drehmomente können jedoch zuverlässig auf das Gehäuse 75 abgeleitet werden.

Um einen weiteren Ausgleich von während des Pressens auftretenden Drehmomenten zu ermöglichen und insbesondere die Führungsstangen 119 vor einer Belastung quer zu der Pressrichtung P zu schützen, ist der Exzenter 73 über eine Koppelstange 85 mit einem weiteren Exzenter 87 verbunden, welcher um eine zu der Drehachse D des Exzenters 73 parallele Drehachse R drehbar ist. Der Exzenter 87 ist, über die Koppelstange 85, mittels des Elektromotors 75 antreibbar, so dass für die beiden Exzenter 73 und 87 lediglich ein einziger Antrieb 71 vorgesehen ist.

Der Exzenter 73 kann daher über einen Angriffspunkt 89 und der weitere Exzenter 87 über einen Angriffspunkt 91 an dem Schlitten 99 bzw. dem Pressmittel 27 angreifen, wobei die Angriffspunkte 89 und 91 quer zu der Pressrichtung P voneinander beabstandet sind. Über die Koppelstange 85 können während des Pressens auftretende Drehmomente zwischen den Angriffspunkten 91 und 89 bzw. dem Exzenter 73 und dem weiteren Exzenter 87 verteilt werden, um eine Auslenkung des Pressmittels 27 quer zu der Pressrichtung P zu verhindern.

Um die Übertragung von Drehmomenten weiter zu verbessern, ist unterhalb des Exzenters 73 ferner ein weiterer Exzenter 93 koaxial zu dem Exzenter 73 angeordnet, welcher über eine weitere Koppelstange 95 mit einem weiteren unteren Exzenter 97 verbunden ist, welcher koaxial unterhalb des weiteren Exzenters 87 angeordnet ist. Der untere Exzenter 93 ist dabei um 90° versetzt zu dem Exzenter 73 angeordnet und der weitere untere Exzenter 97 ist um 90° versetzt zu dem weiteren Exzenter 87 angeordnet. Der untere Exzenter 93 ist ferner ebenfalls drehfest mit der Motorwelle 77 des Elektromotors 75 verbunden, so dass der Elektromotor 75 auch den unteren Exzenter 93 und über die weitere Koppelstange 95 den weiteren unteren Exzenter 97 antreiben kann.

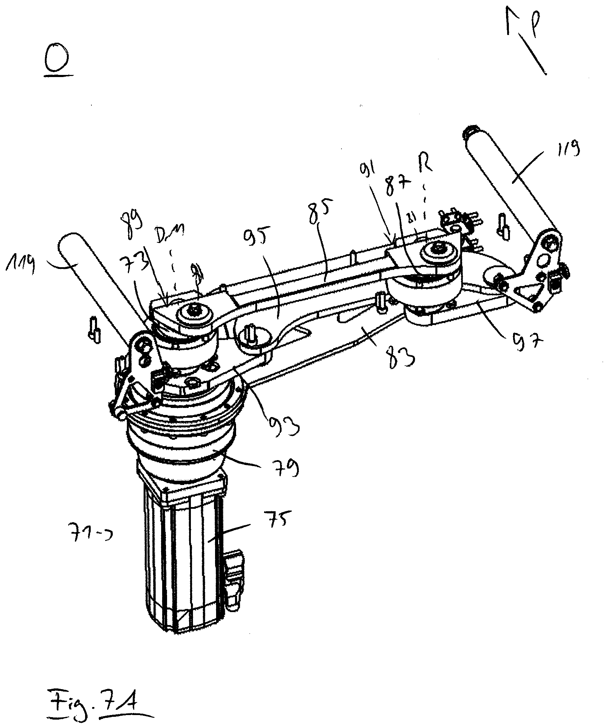

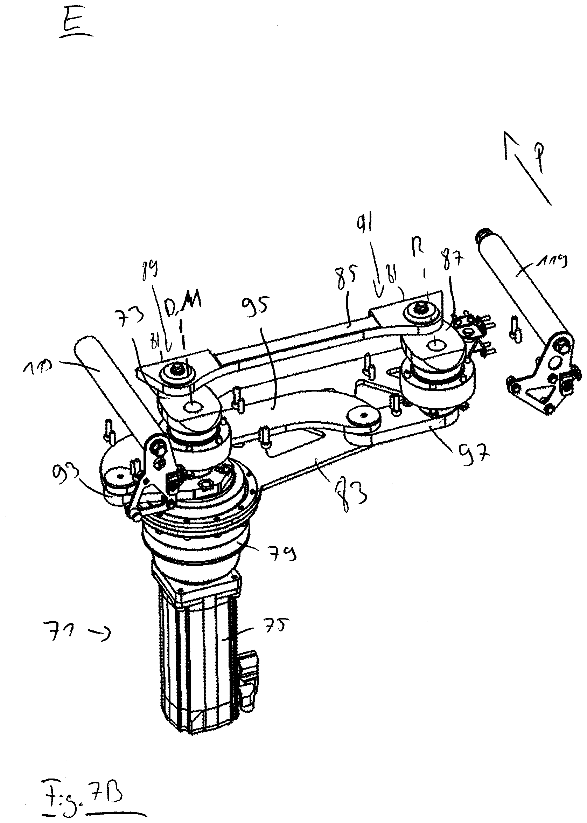

Indem der untere Exzenter 93 und der weitere untere Exzenter 97 um 90° versetzt zu dem Exzenter 73 und dem weiteren Exzenter 87 angeordnet sind, sind der untere Exzenter 93 und der weitere untere Exzenter 97 insbesondere auch in einer Stellung des Pressmittels 27, in welcher der Exzenter 73 und der weitere Exzenter 87 quer zu der Pressrichtung und parallel zu der Koppelstange 85 ausgerichtet sind, entlang der Pressrichtung P und senkrecht zu der weiteren Koppelstange 95 ausgerichtet. Diese Stellung ist insbesondere bei einer Drehung des Exzenters 73 ausgehend von der Startposition O um 90° erreicht. Da der Exzenter 73 und der weitere Exzenter 87 in dieser Stellung parallel zu der Koppelstange 85 ausgerichtet sind, kann in dieser Stellung keine optimale Übertragung von Drehmomenten zwischen dem Angriffspunkt 89 und dem Angriffspunkt 91 erfolgen. Umgekehrt kann jedoch aufgrund der zu der weiteren Koppelstange 95 senkrechten Stellung des unteren Exzenters 93 und des Weiteren unteren Exzenters 97 in dieser Position des Pressmittels 27 ein maximales Drehmoment über die weitere Koppelstange 95 übertragen werden, so dass auch in dieser Position ein optimaler Ausgleich erreicht werden kann. Die weitere Koppelstange 95 ist ferner gekrümmt ausgebildet, um während einer Bewegung des Pressmittels 27 aus der Startposition O in die Endposition E um die Drehachsen D und R des Exzenters 73 bzw. des weiteren Exzenters 87 herumgeführt werden zu können, wie beispielsweise aus den Fig. 7A und 7B hervorgeht.

Der Antrieb 71 ermöglicht somit, das Pressmittel 27 effizient anzutreiben, wobei eine in Pressrichtung P schmale Ausrichtung erreicht werden kann. Zudem sind die Komponenten des Antriebs 71, insbesondere der Exzenter 73, in der Endposition E des Pressmittels 27 nach einem Entfernen der Schutzabdeckung 103 zugänglich, ohne dass der Schlitten 99 aus der Presseinrichtung 11 bzw. der Presskammer 13 entfernt werden muss. Insbesondere kann somit eine Reinigung und/oder Wartung der Komponenten des Antriebs 71 erfolgen, ohne dass der Schlitten 99 entfernt werden muss. Darüber hinaus ist der Exzenter 73 und auch der weitere Exzenter 87 dazu ausgebildet, über ein Gleitelement 81 an dem Pressmittel 27 bzw. dem Schlitten 99 anzugreifen, so dass die Bewegungen der Koppelstange 85 quer zu der Pressrichtung P während eines Verfahrens des Pressmittels 27 ausgeglichen werden können. Die Gleitelemente 81 sind folglich dazu ausgebildet, während eines Verfahrens des Pressmittels 27 an dem Pressmittel 27 bzw. dem Schlitten 99 quer zu der Pressrichtung P abzugleiten.

### Bezugszeichenliste

- 11: Presseinrichtung
- 13: Presskammer
- 15: erstes Gegenelement
- 17: erstes Pressmittel
- 19: Eingang
- 21: Eingangskontrolleinrichtung
- 23: Lichtschranke
- 25: Lichtgitter
- 27: zweites Pressmittel
- 29: drittes Pressmittel
- 31: zweites Gegenelement
- 33: drittes Gegenelement
- 35: Lichtquelle
- 37: erste Seite
- 39: zweite Seite
- 41: Lichtsensor
- 43: Rohr
- 45: Vorderrahmen
- 46: Vorderseite
- 47: Hinterrahmen
- 48: Rückseite
- 49: Einkapselung
- 51: Zustandsanzeigeeinrichtung
- 53: Steuereinrichtung
- 55: Gehäuse
- 57: erster Motor
- 59: zweiter Motor
- 61: Getriebe
- 63: Pressebene
- 65: Luftstromeinrichtung
- 67: Gebläse
- 69: Abdichtung
- 71: Antrieb
- 73: Exzenter
- 75: Elektromotor
- 77: Motorwelle
- 79: Getriebe
- 81: Gleitelement
- 83: Drehmomentstütze
- 85: Koppelstange
- 87: weiterer Exzenter
- 89: Angriffspunkt
- 91: Angriffspunkt
- 93: unterer Exzenter
- 95: weitere Koppelstange
- 97: weiterer unterer Exzenter
- 99: Schlitten
- 101: Presswerkzeug
- 103: Schutzabdeckung
- 105: Sicherheitsschaltung
- 107: Kennzeichnung
- 109: RFID-Chip
- 111: Ausleseeinrichtung
- 113: Ausgang
- 115: Motor
- 117: Riemen
- 118: Spindeltrieb
- 119: Führungsstange
- 121: Sicherungselement
- 123: Lasche
- A: Entnahmestellung
- B: Einbringrichtung
- D: Drehachse
- E: Endposition
- F: Freigabesignal
- L: Längsrichtung
- M: Motordrehachse
- O: Startposition
- P: Pressrichtung
- R: Drehachse
- S: Erfassungssignal

## Patentansprüche

1. Presseinrichtung (11) zum Pressen von Fleischprodukten, insbesondere gefrorenen und/oder angefrorenen Fleischprodukten, bevorzugt Frischfleischprodukten und/oder Bacon,
mit einer sich entlang einer Längsrichtung (L) erstreckenden Presskammer (13), in welche ein zu pressendes Produkt entlang einer Einbringrichtung (B) durch einen Eingang (19) einbringbar ist,
und mit einer Eingangskontrolleinrichtung (21), welche dazu ausgebildet ist, ein sich in dem Eingang (19) befindendes Objekt zu erfassen und ein entsprechendes Erfassungssignal (S) auszusenden, wobei die Eingangskontrolleinrichtung (21) mit einer Steuereinrichtung (53) verbunden ist, wobei die Steuereinrichtung (53) dazu ausgebildet ist, das Erfassungssignal (S) zu empfangen und einen Pressvorgang der Presseinrichtung (11) zu steuern,
wobei die Eingangskontrolleinrichtung (21) dazu ausgebildet ist, ein Freigabesignal (F) auszusenden, wenn sich kein Objekt in dem Eingang (19) befindet,
**dadurch gekennzeichnet, dass**
die Steuereinrichtung (53) dazu ausgebildet ist, den Pressvorgang bei einer vorgegebenen oder vorgebbaren zeitlichen Korrelation zwischen einem Erfassungssignal (S) und einem darauffolgenden Freigabesignal (F) zu starten.

2. Presseinrichtung (11) nach Anspruch 1,
wobei die Eingangskontrolleinrichtung (21) eine Lichtschranke (23) umfasst und dazu ausgebildet ist, das Erfassungssignal (S) bei einer Unterbrechung der Lichtschranke (23) auszusenden.

3. Presseinrichtung (11) nach Anspruch 1 oder 2,
wobei die Eingangskontrolleinrichtung (21) dazu ausgebildet ist, ein Lichtgitter (25) entlang des Eingangs (19) zu erzeugen und das Erfassungssignal (S) bei einer Unterbrechung des Lichtgitters (25) auszusenden.

4. Presseinrichtung (11) nach einem der vorhergehenden Ansprüche,
wobei die Eingangskontrolleinrichtung (21) eine Vielzahl von Lichtquellen (35) umfasst, welche dazu ausgebildet sind, einen jeweiligen Lichtstrahl von einer ersten Seite (37) des Eingangs (19) quer zu der Einbringrichtung (B) zu einer zweiten Seite (39) des Eingangs (19) auszusenden, wobei die Eingangskontrolleinrichtung (21) an der zweiten Seite (39) des Eingangs (19) für jede der Vielzahl von Lichtquellen (35) einen zugeordneten Lichtsensor (41) aufweist, welcher dazu ausgebildet ist, den von der zugeordneten Lichtquelle (35) ausgesandten Lichtstrahl zu detektieren, wobei die Eingangskontrolleinrichtung (21) dazu ausgebildet ist, das Erfassungssignal (S) auszusenden, wenn zumindest einer der Lichtsensoren (41) keinen Lichtstrahl detektiert,
insbesondere wobei die Lichtquellen (35) an der ersten Seite (37) hintereinander, insbesondere vertikal hintereinander, und die Lichtsensoren (41) an der zweiten Seite (39) hintereinander, insbesondere vertikal hintereinander, angeordnet sind.

5. Presseinrichtung (11) nach Anspruch 4,
wobei die Lichtquellen (35) und die Lichtsensoren (41) in einem jeweiligen Rohr (43) oder Stab angeordnet sind, insbesondere wobei das Rohr (43) oder der Stab aus einem für die jeweils verwendete Wellenlänge des Lichts transparenten Material hergestellt ist, bevorzugt aus einem Kunststoff, aus Plexiglas, aus einem Metall oder aus einer Keramik.

6. Presseinrichtung (11) nach einem Anspruch 4 oder 5,
wobei die Presseinrichtung (11) einen Vorderrahmen (45), insbesondere Blechrahmen, umfasst, durch welchen die Lichtquellen (35) und/oder die Lichtsensoren (41) an einer der Presskammer (13) abgewandten Vorderseite (46) abgeschirmt sind; und/oder
wobei die Presseinrichtung (11) einen Hinterrahmen (47), insbesondere Blechrahmen, umfasst, durch welchen die Lichtquellen (35) und/oder die Lichtsensoren (41) an einer der Presskammer (13) zugewandten Rückseite (48) abgeschirmt sind.

7. Presseinrichtung (11) nach einem der Ansprüche 4 bis 6,
wobei die Lichtquellen (35) und/oder die Lichtsensoren (41) dreiseitig, insbesondere U-förmig, eingekapselt sind.

8. Presseinrichtung (11) nach einem der vorhergehenden Ansprüche,
wobei die Presseinrichtung (11) eine Zustandsanzeigeeinrichtung (51) aufweist, welche dazu ausgebildet ist, einen Bereitschaftszustand der Presseinrichtung (11) zum Durchführen eines Pressvorgangs anzuzeigen, wenn die Eingangskontrolleinrichtung (21) kein Erfassungssignal (S) aussendet.

9. Presseinrichtung (11) nach einem der vorhergehenden Ansprüche,
wobei die Presskammer (13) zumindest ein Gegenelement (15, 31, 33) und ein zum Komprimieren des Produkts in Richtung des Gegenelements (15, 31, 33) verfahrbares Pressmittel (17, 27, 29) umfasst,
insbesondere wobei das Produkt über das Pressmittel (27) hinweg in die Presskammer (13) einbringbar ist.

10. Presseinrichtung (11) nach einem der vorhergehenden Ansprüche,
wobei das Produkt manuell in die Presskammer (13) einbringbar ist und/oder wobei die Presskammer (13) während des Pressens durch den Eingang (19) zugänglich ist.

11. Presseinrichtung (11) nach einem der vorhergehenden Ansprüche,
wobei die Einbringrichtung (B) quer zu der Längsrichtung (L) ausgerichtet ist.

12. Presseinrichtung (11) nach einem der vorhergehenden Ansprüche,
wobei die Steuereinrichtung (53) dazu ausgebildet ist, den Pressvorgang in Ansprechen auf das Erfassungssignal (S) zu verlangsamen; und/oder
wobei die Steuereinrichtung (53) dazu ausgebildet ist, den Pressvorgang in Ansprechen auf das Erfassungssignal (S) zu stoppen.

13. Verfahren zum Pressen von Fleischprodukten, insbesondere gefrorenen und/oder angefrorenen Fleischprodukten, bevorzugt Frischfleischprodukten und/oder Bacon, mittels einer Presseinrichtung (11) nach einem der vorhergehenden Ansprüche,
wobei ein Produkt durch einen Eingang (19) in eine Presskammer (13) der Presseinrichtung (11) eingebracht wird,
**dadurch gekennzeichnet, dass**
der Pressvorgang in Ansprechen auf ein Erfassungssignal (S) einer Eingangskontrolleinrichtung (21), welche dazu ausgebildet ist, ein sich in dem Eingang (19) befindliches Objekt zu erfassen, und ein darauffolgendes Freigabesignal (F) der Eingangskontrolleinrichtung (21), welches anzeigt, dass sich kein Objekt in dem Eingang (19) befindet, gestartet wird.

14. Verfahren nach Anspruch 13,
wobei ein bereits gestarteter Pressvorgang in Ansprechen auf das Erfassungssignal (S) verlangsamt wird

15. Verfahren nach Anspruch 14,
wobei der bereits gestartete Pressvorgang in Ansprechen auf das Erfassungssignal (S) gestoppt wird.

## Claims

1. A pressing device (11) for pressing meat products, in particular frozen and/or partly frozen meat products, preferably fresh meat products and/or bacon, comprising a pressing chamber (13) which extends along a longitudinal direction (L) and into which a product to be pressed can be inserted through an entrance (19) along an insertion direction (8); and
an entrance control device (21) which is configured to detect an object located in the entrance (19) and to transmit a corresponding detection signal (8),
wherein the entrance control device (21) is connected to a control device (53), wherein the control device (53) is configured to receive the detection signal (S) and to control a pressing process of the pressing device (11),
wherein the entrance control device (21) is configured to transmit a release signal (F) when no object is located in the entrance (19),
**characterized in that**
the control device (53) is configured to start the pressing process at a predefined or predefinable time correlation between a detection signal (S) and a subsequent release signal (F).

2. A pressing device (11) according to claim 1,
wherein the entrance control device (21) comprises a light barrier (23) and is configured to transmit the detection signal (S) on an interruption of the light barrier (23).

3. A pressing device (11) according to claim 1 or 2,
wherein the entrance control device (21) is configured to generate a light grid (25) along the entrance (19) and to transmit the detection signal (S) on an interruption of the light grid (25).

4. A pressing device (11) according to any one of the preceding claims,
wherein the entrance control device (21) comprises a plurality of light sources (35) which are configured to transmit a respective light beam from a first side (37) of the entrance (19) transversely to the insertion direction (8) to a second side (39) of the entrance (19), wherein, at the second side (39) of the entrance (19), the entrance control device (21) has an associated light sensor (41) for each of the plurality of light sources (35) that is configured to detect the light beam transmitted by the associated light source (35), wherein the entrance control device (21) is configured to transmit the detection signal (S) when at least one of the light sensors (41) does not detect a light beam,
in particular wherein the light sources (35) are arranged behind one another, in particular vertically behind one another, at the first side (37) and the light sensors (41) are arranged behind one another, in particular vertically behind one another, at the second side (39).

5. A pressing device (11) according to claim 4,
wherein the light sources (35) and the light sensors (41) are arranged in a respective tube (43) or rod, in particular wherein the tube (43) or the rod is made from a material transparent for the respective wavelength of the light used, preferably from a plastic, from Plexiglas, from a metal or from a ceramic material.

6. A pressing device (11) according to claim 4 or 5,
wherein the pressing device (11) comprises a front frame (45), in particular a sheet metal frame, by which the light sources (35) and/or the light sensors (41) are shielded at a front side (46) facing away from the pressing chamber (13);
and/or
wherein the pressing device (11) comprises a rear frame (47), in particular a sheet metal frame, by which the light sources (35) and/or the light sensors (41) are shielded at a rear side (48) facing the pressing chamber (13).

7. A pressing device (11) according to any one of the claims 4 to 6,
wherein the light sources (35) and/or the light sensors (41) are encapsulated at three sides, in particular in a U shape.

8. A pressing device (11) according to any one of the preceding claims,
wherein the pressing device (11) has a state display device (51) which is configured to indicate a readiness state of the pressing device (11) for performing a pressing process when the entrance control device (21) does not transmit a detection signal (S).

9. A pressing device (11) according to any one of the preceding claims,
wherein the pressing chamber (13) comprises at least one counter-element (15, 31, 33) and a pressing means (17, 27, 29) which can be moved in the direction of the counter-element (15, 31, 33) in order to compress the product,
in particular wherein the product can be inserted over the pressing means (27) into the pressing chamber (13).

10. A pressing device (11) according to any one of the preceding claims,
wherein the product can be manually inserted into the pressing chamber (13); and/or
wherein the pressing chamber (13) is accessible through the entrance (19) during the pressing.

11. A pressing device (11) according to any one of the preceding claims,
wherein the insertion direction (8) is oriented transversely to the longitudinal direction (L).

12. A pressing device (11) according to any one of the preceding claims,
wherein the control device (53) is configured to slow down the pressing process in response to the detection signal (8); and/or
wherein the control device (53) is configured to stop the pressing process in response to the detection signal (S).

13. A method of pressing meat products, in particular frozen and/or partly frozen meat products, preferably fresh meat products and/or bacon, by means of a pressing device (11) according to any one of the preceding claims,
wherein a product is inserted through an entrance (19) into a pressing chamber (13) of the pressing device (11),
**characterized in that**
the pressing process is started in response to a detection signal (S) of an entrance control device (21), which is configured to detect an object located in the entrance (19), and a subsequent release signal (F) of the entrance control device (21) that indicates that no object is located in the entrance (19).

14. A method according to claim 13,
wherein an already started pressing process is slowed down in response to the detection signal (S).

15. A method according to claim 14,
wherein the already started pressing process is stopped in response to the detection signal (S).

## Revendications

1. Dispositif de pressage (11) pour presser des produits carnés, en particulier des produits carnés surgelés et/ou congelés, de préférence des produits carnés frais et/ou du bacon,
comprenant une chambre de pressage (13) s'étendant le long d'une direction longitudinale (L), dans laquelle un produit à presser peut être introduit par une entrée (19) le long d'une direction d'introduction (B),
et comprenant un dispositif de contrôle d'entrée (21) conçu pour détecter un objet se trouvant dans l'entrée (19) et pour émettre un signal de détection (S) correspondant,
dans lequel le dispositif de contrôle d'entrée (21) est relié à un dispositif de commande (53), le dispositif de commande (53) étant conçu pour recevoir le signal de détection (S) et pour commander une opération de pressage du dispositif de pressage (11),
le dispositif de contrôle d'entrée (21) est conçu pour émettre un signal de libération (F) si aucun objet ne se trouve dans l'entrée (19),
**caractérisé en ce que**
le dispositif de commande (53) est conçu pour démarrer l'opération de pressage en présence d'une corrélation temporelle prédéfinie ou prédéfinissable entre un signal de détection (S) et un signal de libération (F) consécutif.

2. Dispositif de pressage (11) selon la revendication 1,
dans lequel le dispositif de contrôle d'entrée (21) présente une barrière lumineuse (23) et est conçu pour émettre le signal de détection (S) en cas d'interruption de la barrière lumineuse (23).

3. Dispositif de pressage (11) selon la revendication 1 ou 2,
dans lequel le dispositif de contrôle d'entrée (21) est conçu pour générer une grille lumineuse (25) le long de l'entrée (19) et pour émettre le signal de détection (S) en cas d'interruption de la grille lumineuse (25).

4. Dispositif de pressage (11) selon l'une des revendications précédentes, dans lequel le dispositif de contrôle d'entrée (21) présente une pluralité de sources de lumière (35) conçues pour émettre un faisceau lumineux respectif depuis un premier côté (37) de l'entrée (19) transversalement à la direction d'introduction (B) jusqu'à un deuxième côté (39) de l'entrée (19), le dispositif de contrôle d'entrée (21) comprenant, sur le deuxième côté (39) de l'entrée (19), pour chacune de la pluralité de sources de lumière (35), un capteur de lumière associé (41) conçu pour détecter le faisceau lumineux émis par la source de lumière associée (35), le dispositif de contrôle d'entrée (21) étant conçu pour émettre le signal de détection (S) si l'un au moins des capteurs de lumière (41) ne détecte pas de faisceau lumineux,
en particulier, les sources de lumière (35) sont disposées sur le premier côté (37) les unes derrière les autres, en particulier verticalement les unes derrière les autres, et les capteurs de lumière (41) sont disposés sur le deuxième côté (39) les uns derrière les autres, en particulier verticalement les uns derrière les autres.

5. Dispositif de pressage (11) selon la revendication 4,
dans lequel les sources de lumière (35) et les capteurs de lumière (41) sont disposés dans un tube (43) ou barreau respectif,
en particulier, le tube (43) ou barreau est fabriqué en un matériau transparent pour la longueur d'onde respective de la lumière, de préférence en une matière plastique, en plexiglas, en un métal ou en une céramique.

6. Dispositif de pressage (11) selon la revendication 4 ou 5,
dans lequel le dispositif de pressage (11) comprend un cadre avant (45), en particulier un cadre en tôle, par lequel les sources de lumière (35) et/ou les capteurs de lumière (41) sont protégés sur une face avant (46) détournée de la chambre de pressage (13) ; et/ou
le dispositif de pressage (11) comprend un cadre arrière (47), en particulier un cadre en tôle, par lequel les sources de lumière (35) et/ou les capteurs de lumière (41) sont protégés sur une face arrière (48) tournée vers la chambre de pressage (13).

7. Dispositif de pressage (11) selon l'une des revendications 4 à 6,
dans lequel les sources de lumière (35) et/ou les capteurs de lumière (41) sont encapsulés sur trois côtés, en particulier en forme de U.

8. Dispositif de pressage (11) selon l'une des revendications précédentes, dans lequel le dispositif de pressage (11) comporte un dispositif d'affichage d'état (51) conçu pour indiquer un état de disponibilité du dispositif de pressage (11) pour effectuer une opération de pressage si le dispositif de contrôle d'entrée (21) n'émet pas de signal de détection (S).

9. Dispositif de pressage (11) selon l'une des revendications précédentes, dans lequel la chambre de pressage (13) comprend au moins un contre-élément (15, 31, 33) et un moyen de pressage (17, 27, 29) déplaçable en direction du contre-élément (15, 31, 33) pour comprimer le produit,
en particulier, le produit peut être introduit dans la chambre de pressage (13) au-delà du moyen de pressage (27).

10. Dispositif de pressage (11) selon l'une des revendications précédentes, dans lequel le produit peut être introduit manuellement dans la chambre de pressage (13), et/ou
la chambre de pressage (13) est accessible par l'entrée (19) pendant le pressage.

11. Dispositif de pressage (11) selon l'une des revendications précédentes, dans lequel la direction d'introduction (B) est orientée transversalement à la direction longitudinale (L).

12. Dispositif de pressage (11) selon l'une des revendications précédentes, dans lequel le dispositif de commande (53) est conçu pour ralentir l'opération de pressage en réponse au signal de détection (S) ; et/ou le dispositif de commande (53) est conçu pour arrêter l'opération de pressage en réponse au signal de détection (S).

13. Procédé pour presser des produits carnés, en particulier des produits carnés surgelés et/ou congelés, de préférence des produits carnés frais et/ou du bacon, à l'aide d'un dispositif de pressage (11) selon l'une des revendications précédentes,
dans lequel un produit est introduit par une entrée (19) dans une chambre de pressage (13) du dispositif de pressage (11),
**caractérisé en ce que**
l'opération de pressage est démarrée en réponse à un signal de détection (S) d'un dispositif de contrôle d'entrée (21) conçu pour détecter un objet se trouvant dans l'entrée (19), et en réponse à un signal de libération (F) consécutif du dispositif de contrôle d'entrée (21), qui indique qu'aucun objet ne se trouve dans l'entrée (19).

14. Procédé selon la revendication 13,
dans lequel une opération de pressage déjà démarrée est ralentie en réponse au signal de détection (S).

15. Procédé selon la revendication 14,
dans lequel l'opération de pressage déjà démarrée est arrêtée en réponse au signal de détection (S).
